(19) Europäisches Patentamt
European Patent Office
Office européen des brevets

(11) EP 4 684 651 A1

(12) **EUROPEAN PATENT APPLICATION**

(43) Date of publication:
**28.01.2026 Bulletin 2026/05**

(21) Application number: **24382798.7**

(22) Date of filing: **23.07.2024**

(51) International Patent Classification (IPC):
***A23L 29/256*** *(2016.01)*

(52) Cooperative Patent Classification (CPC):
**A23L 29/256;** A23V 2002/00; A23V 2250/507

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Foods For Tomorrow. S.L.**
**08013 Barcelona (ES)**

(72) Inventors:
- **FERNÁNDEZ FARRÉS, Isabel**
  **E-08014 Barcelona (ES)**
- **BEN SASSI, Elyes Renaud**
  **E-08013 Barcelona (ES)**
- **ULAGANATHAN, Vamseekrishna**
  **E-08015 Barcelona (ES)**
- **SALCEDO SANDOVAL, Jenny Lorena**
  **E-17180 Vilablareix, Girona (ES)**

(74) Representative: **ABG Intellectual Property Law, S.L.**
**Avenida de Burgos, 16D**
**Edificio Euromor**
**28036 Madrid (ES)**

(54) **NON-DAIRY CHEESE**

(57) The present invention relates to a non-dairy cheese product comprising a non-dairy protein isolate, fat, agar, and which is devoid of starch; to a process of manufacture of said non-dairy cheese product; to a non-dairy cheese product obtainable by said process; and to food products comprising said non-dairy cheese product.

EP 4 684 651 A1

## Description

### FIELD OF THE INVENTION

The present invention relates to the field of non-dairy cheese product, in particular to sliceable and/or meltable cheese products mimicking conventional sliceable and meltable cheeses derived from animal milk, as well as to a method for the manufacture of said non-dairy cheese product and food products containing it.

### BACKGROUND OF THE INVENTION

Consumption of food products containing proteins from vegetable or plant origin instead of protein of animal origin have gained increasing popularity over the years. The main motivations to follow a plant-based diet appear to be health aspirations, taste, animal welfare, and increasing environmental concern, with the former increasing in relevance due to the current climate crisis. Therefore, the industry is experiencing an expansion in the production of non-dairy food products, such as dairy product analogues, including cheese.

Properties of cheese products, such as meltability, sliceability, taste, and appearance, influence consumer acceptance and preference for said products. Consumers expect to consume non-dairy cheese products mimicking non-dairy cheese products to have similar properties.

Although non-dairy cheese products are available in the market, the potential for development still remains. Most of the non-dairy cheeses present in the supermarkets are composed of modified starches to allow meltability upon heating. Moreover, starches are often used as fillers in these products which significantly reduces the nutritional quality of the final product. These ingredients are also badly perceived by the consumers. Furthermore, currently available non-dairy alternatives composed of plant-based proteins often lack in suitable sliceability and/or meltability. In this regard, it is extremely complex to arrive at a composition which fulfils the previously mentioned properties expected by consumers.

Thus, there is a need for new non-dairy cheese products having similar properties to conventional cheese, in particular meltability and sliceability.

### SUMMARY OF THE INVENTION

The inventors have surprisingly found that non-dairy cheese products having excellent sliceability and meltability properties, and also good nutritional value can be obtained when using a composition comprising a specific mixture of ingredients and at specific concentrations. The inventors have observed that when additional ingredients, such as starches, are added, or when the ingredients are combined at different concentrations the resulting product does not fulfil the required sliceability and meltability properties.

Thus, in a first aspect, the present invention relates to a non-dairy cheese product comprising:

i) from 0.5 to 16 wt% of a non-dairy protein isolate having a solubility lower than 40%, wherein said solubility is determined by dispersing 1.0 wt% of said non-diary protein isolate in water with 0.5 wt% NaCl at 70 °C and pH 7;
ii) from 5 to 30 wt% of fat, wherein said fat comprises a mixture of saturated and unsaturated fatty acyl groups and wherein the saturated fatty acyl content in said fat ranges from 19% to 94 wt% of with respect to the total fat weight;
iii) either from 1.5 to 10 wt% of agar, or

from 1 to 10 wt% of agar in combination with from 0.05 to 0.3 wt% of a hydrocolloid selected from the group consisting of carrageenan, guar gum, locust bean gum, xanthan gum, pectin, alginate and mixtures thereof; and

wherein the non-dairy cheese product is devoid of starch, and
wherein the weight percentages are expressed with respect to the total weight of the non-dairy cheese product.

In a second aspect, the invention relates to a process for the manufacture of a non-dairy cheese product according to the first aspect, wherein the process comprises:

a) dissolving the agar and, when present, the hydrocolloid selected from the group consisting of carrageenan, guar gum, locust bean gum, xanthan gum, pectin, alginate and mixtures thereof; in water at a temperature from 60 to 98 °C to obtain a solution;
b) adding the fat to the solution obtained in step a) and emulsifying at a temperature of from 50 to 98 °C to obtain an emulsion;
c) adding the non-dairy protein isolate to the emulsion obtained in step b) and mixing at a temperature of from 50 to 98 °C to obtain a mixture;

d) cooling the mixture obtained in step c) to a temperature of from 4 to 10 °C to provide the non-dairy cheese product.

In a third aspect, the invention relates to a non-dairy cheese product obtainable by the process according to the second aspect.

In a fourth aspect, the invention relates to a food product comprising the non-dairy cheese product according to the first or third aspect.

## DESCRIPTION OF THE FIGURES

Figure 1 shows the percentage of solubility for the protein isolate dispersions of total protein concentration of 1% (w/w), NaCl 0.5% (w/w), pH 7.0, heated at 70°C.

Figure 2 shows a top view of cheese-like samples before and after heating in the oven for 6 minutes at 200°C.

Figure 3 shows images of cheese-like samples sliced with their evaluated sliceability grade.

Figure 4 shows at the Top panel - Hardness and Young's modulus obtained from puncture test using Texture Analyser; Middle panel - Meltability (%) obtained using Schreiber's test; Bottom panel - Sliceability score for different solubility levels of protein isolates (PI).

Figure 5 shows at the Top panel - Hardness and Young's modulus obtained from puncture test using Texture Analyser; Middle panel - Meltability (%) obtained using Schreiber's test; Bottom panel - Sliceability score for different agar concentrations.

Figure 6 shows at the Top panel - Hardness and Young's modulus obtained from puncture test using Texture Analyser, Middle panel - Meltability (%) obtained using Schreiber's test, Bottom panel - Sliceability score for different saturated fat concentrations.

Figure 7 shows at the Top panel - Hardness and Young's modulus obtained from puncture test using Texture Analyser, Middle panel - Meltability (%) obtained using Schreiber's test, Bottom panel - Sliceability score for different PI concentrations.

Figure 8 shows at the Top panel - Hardness and Young's modulus obtained from puncture test using Texture Analyser, Middle panel - Meltability (%) obtained using Schreiber's test, Bottom panel - Sliceability score for total fat concentrations.

Figure 9 shows at the Top panel - Hardness and Young's modulus obtained from puncture test using Texture Analyser, Middle panel - Meltability (%) obtained using Schreiber's test, Bottom panel - Sliceability score for different hydrocolloids addition.

Figure 10 shows at the Top panel - Hardness and Young's modulus obtained from puncture test using Texture Analyser, Middle panel - Meltability (%) obtained using Schreiber's test, Bottom panel - Sliceability score for different hydrocolloid combinations with agar.

Figure 11 shows at the Top panel - Hardness and Young's modulus obtained from puncture test using Texture Analyser, Middle panel - Meltability (%) obtained using Schreiber's test, Bottom panel - Sliceability score for different starch concentrations.

Figure 12 shows at the Top panel - Hardness and Young's modulus obtained from puncture test using Texture Analyser, Middle panel - Meltability (%) obtained using Schreiber's test, Bottom panel - Sliceability score for different pH conditions of the product.

## DESCRIPTION OF THE INVENTION

Non-dairy cheese product

In the first aspect, the invention relates to a non-dairy cheese product comprising:

i) from 0.5 to 16 wt% of a non-dairy protein isolate having a solubility lower than 40%, wherein said solubility is determined by dispersing 1.0 wt% of said non-diary protein isolate in water with 0.5 wt% NaCl at 70 °C and pH 7;
ii) from 5 to 30 wt% of fat, wherein said fat comprises a mixture of saturated and unsaturated fatty acyl groups and wherein the saturated fatty acyl content ranges from 19% to 94 wt% of with respect to the total fat weight;
iii) either from 1.5 to 10 wt% of agar, or

from 1 to 10 wt% of agar in combination with from 0.05 to 0.3 wt% of a hydrocolloid selected from the group consisting of carrageenan, guar gum, locust bean gum, xanthan gum, pectin, alginate and mixtures thereof; and

wherein the non-dairy cheese product is devoid of starch, and
wherein the weight percentages are expressed with respect to the total weight of the non-dairy cheese product.

The term "non-dairy" as used herein refers to a product, in particular a food product, containing no components from animal origin, such as pesco-, ovo-, lacto-, and meat-based sources, and comprising at least a component from plant sources, such as non-dairy proteins, in particular from legumes (e.g. soybeans, lentils, peas, chickpeas, favas), nuts, vegetables, wheat, whole grains, among others, preferably from soybeans.

The term "cheese product" or "cheese analogue" as used herein refers to a product mimicking conventional cheese comprising components from animal origin. The cheese product is suitable for the preparation of food products comprising cheese, such as pizza, sandwich, cheese stick, burrito, taco, quesadilla, pasta, cheeseburger, cheese sausage, tortilla chips, cheese sauce, fondue, and raclette.

The non-dairy cheese product of the invention comprises from 0.5 to 16 wt% of a non-dairy protein isolate with respect to the total weight of the non-dairy cheese product, wherein the non-dairy protein isolate has a solubility lower than 40%, wherein said solubility is determined by dispersing 1.0 wt% of said non-diary protein isolate in water with 0.5 wt% NaCl at 70 °C and pH 7. Preferably, the non-dairy cheese product of the invention comprises from 10 to 16 wt% of the non-dairy protein isolate with respect to the total weight of the non-dairy cheese product. Still more preferably, the non-dairy cheese product of the invention comprises from 10 to 12 wt% of the non-dairy protein isolate with respect to the total weight of the non-dairy cheese product.

The term "protein isolate" or "PI" as used herein refers to a mixture of proteins obtained from defatted non-dairy grains or legumes or vegetable by removing most of the fat and carbohydrate fraction of the beans, yielding a product with no less than 85 wt.% protein on a dry basis of said product, preferably no less than 90 wt.%, even more preferably from 90 to 95 wt.%.

Preferably, the non-dairy protein isolate is selected from the group consisting of legume protein isolates, including from soybeans (soy), peas, lentils, chickpeas, black beans, kidney beans, mung beans, fava beans, pinto beans, lupin; grain protein isolates, including from maize/corn meal, millet, rice, wheat/seitan (including gluten), barley, oat, spelt, and teff; seed protein isolates, including from buckwheat, quinoa, amaranth, chia, flax, hemp, sunflower, and pumpkin; nut protein isolates, including from walnuts, almonds, and cashews; bacterial protein isolates, including spirulina; vegetable protein isolates, including from broccoli, spinach, asparagus, artichoke, potato, sweet potato, and brussels sprouts; fruit protein isolates, including from guava, cherimoyas, blueberries, blackberries, nectarines, and bananas; fungal protein isolates, including mycoprotein; and mixtures thereof; more preferably wherein the non-dairy protein isolate is selected from the group consisting of soy protein isolate, pea protein isolate, potato protein isolate, fava protein isolate, maize protein isolate and mixtures thereof; more preferably wherein the non-dairy protein isolate is selected from the group consisting of soy protein isolate, pea protein isolate, potato protein isolate, fava protein isolate and mixtures thereof; still more preferably wherein the non-dairy protein isolate is selected from the group consisting of soy protein isolate, pea protein isolate, and mixtures thereof; even more preferably wherein the non-dairy protein isolate is soy protein isolate.

The solubility of the non-dairy protein isolate may be determined following the procedure described in the examples. In particular, the solubility is determined by preparing a dispersion of the non-dairy protein isolate in water at a concentration of 1.0 wt% with respect to the total weight of the dispersion along with 0.5 wt% of NaCl, adjusting the pH to 7 (using if required 1 M hydrochloric acid or 1 M sodium hydroxide), stirring for 1 hour at 70 °C. The dispersion is then allowed to reach room temperature (20 to 25 °C). The dispersion is centrifuged and the supernatant is filtered through a filter having a pore size of 0.45 μm, The concentration of protein in the filtrate may be quantified by any suitable method in the art, such as the Dumas method [Chiacchierini, E., et al. "Milk soluble whey proteins: fast and precise determination with Dumas method." Analytical letters 36.11 (2003): 2473-2484], which is based on the combustion of the sample, and a subsequent purification of the gases obtained and the measurement of the thermal conductivity of nitrogen gas which is later translated

into protein content, as described in the examples. The solubility (in %) is obtained by dividing the concentration of the protein in the filtrate by the total protein concentration in the dispersion according to Equation 1:

$$Solubility\ (\%) = \frac{Concentration\ of\ protein\ in\ filtrate}{Total\ protein\ concentration\ in\ the\ dispersion}$$

*Equation 1*

The non-dairy protein isolate used in the non-dairy cheese product of the invention has a solubility lower than 40%, preferably lower than 35%, more preferably lower than 30%, still more preferably lower than 25%, wherein said solubility is determined by dispersing 1.0 wt% of said non-diary protein isolate in water with 0.5 wt% NaCl at 70 °C and pH 7. Preferably, the solubility of the non-dairy protein isolate used in the non-dairy cheese product of the invention is at least 7.5 wt%, preferably at least 8%, more preferably at least 10%, more preferably at least 15%, still more preferably at least 20%, wherein said solubility is determined by dispersing 1.0 wt% of said non-diary protein isolate in water with 0.5 wt% NaCl at 70 °C and pH 7.

The expression "by dispersing 1.0 wt% of said non-diary protein isolate in water with 0.5 wt% NaCl at 70 °C and pH 7" as used herein refers to a dispersion of the non-dairy protein isolate in water, preferably distilled water, comprising 0.5 wt% of NaCl, which may further comprise a pH adjusting agent so that the pH of the dispersion is 7.0, such as hydrochloric acid or sodium hydroxide, and which has been stirred at 70 °C for about 1 hour.

The volume weighted mean diameter D[4,3] is also known as the De Broucker mean and is a measure of particle size. It represents the center of mass for frequency distribution in units of volume, and it is commonly used to represent the mean diameter of a particle within a polydisperse system. The De Broucker mean is defined in terms of the moment-ratio system according to Equation 2,

$$D[4,3] = \frac{\sum n_i D_i^4}{\sum n_i D_i^3} \qquad \textit{Equation 2}$$

where $n_i$ is the frequency of occurrence of particles in size class i, having a mean diameter $D_i$.

Another measure of particle size is D90, which is the particle diameter point in microns below which 90 vol.% of the particles are contained.

D[4,3] and D90 may be determined using laser diffraction techniques. The D[4,3] and D90 of the non-dairy protein isolates may be measured by Static Light Scattering (SLS) of a dispersion of said non-dairy protein isolate in distilled water at a concentration of 1.0 wt.% of plant protein isolate with respect to the total weight of the dispersion along with 0.5 wt% of NaCl and at pH 7.0. Hydrochloric acid or sodium Hydroxide may be used to adjust the pH, particularly 1 M HCl or 1 M NaOH. The non-dairy protein isolate dispersions are stirred for 1 hour at 70 °C. The dispersion is then allowed to reach room temperature (20 to 25 °C) and the particle size is determined by SLS. SLS is a technique that measures the intensity of the scattered light of dispersed particles illuminated by a laser beam. Particles are hit by a red beam light ($\lambda$=633 nm) and a blue beam light ($\lambda$=470 nm) and diffract these in all directions. Large particles diffract light on smaller angles with high intensity, whereas small particles diffract light on wider angles with lower intensity. Detailed experimental protocols to determine the D[4,3] and D90 of the plant-proteins are provided in the examples.

Preferably, the non-dairy protein isolate has a volume weighted mean diameter D[4,3] of from 40 to 250 $\mu$m, more preferably from 50 to 150 $\mu$m, wherein said volume weighted mean diameter D[4,3] is determined by dispersing 1.0 wt% of said non-diary protein isolate in water with 0.5 wt% NaCl at 70 °C and pH 7.

In a particular embodiment, the non-dairy protein isolate has a D90 particle size of from 80 to 500 $\mu$m, preferably from 120 to 300 $\mu$m, wherein said D90 particle size is determined by dispersing 1.0 wt% of said non-diary protein isolate in water with 0.5 wt% NaCl at 70 °C and pH 7.

In a preferred embodiment, the non-dairy protein has a volume weighted mean diameter D[4,3] of from 50 to 250 $\mu$m and/or solubility lower than 30%, wherein said volume weighted mean diameter D[4,3] and said solubility are determined by dispersing 1.0 wt% of said protein isolate in water with 0.5 wt% NaCl at 70 °C and pH 7. More preferably, the non-dairy protein has a volume weighted mean diameter D[4,3] of from 50 to 250 $\mu$m and solubility lower than 30%, wherein said volume weighted mean diameter D[4,3] and said solubility are determined by dispersing 1.0 wt% of said protein isolate in water with 0.5 wt% NaCl at 70 °C and pH 7.

The protein isolates used in the present invention are commercially available or could be obtained through a process that comprises alkali solution extraction, separation, acidification, separation washing, neutralization, filtration or centrifugation, heat treatment, cooling and spray drying. The process may comprise the following steps:

- The non-dairy grains or legumes may be cleaned, cracked, and dehulled to remove the outer shell of the bean.

- Defatting: The defatting process removes the oil from the cleaned, cracked, and dehulled non-dairy grains or legumes, which helps to concentrate the protein. This is commonly done using hexane, but it can also be carried out by mechanical methods such as pressing or centrifugation.
- Separation: When a solvent, such as hexane, is used in the defatting step, the resulting mixture of oil and solvent is separated from the remaining solids (the defatted fraction) by centrifugation.
- Extraction: The defatted fraction obtained from the previous steps and water are mixed at a ratio of 1:2 to 1:9 at a temperature of 10 to 40 °C. An alkali solution (aqueous sodium hydroxide or aqueous potassium hydroxide) is added to adjust the pH to from 7.0 to 9.0, then the solution is optionally stirred at medium speed for 15 to 30 min. The alkali-extracted liquid is then separated from the insoluble residues using a filter press or centrifuge, preferably by centrifugation. The resulting solution contains the dissolved proteins, whilst the solid residue is discarded.
- Acidification: The protein extract is then acidified to precipitate and form curds at a pH near the isoelectric point (pH 4.2 - 4.8). The precipitated proteins form a curd and are then separated by mechanical decanting or centrifugation.
- Washing: the curd is washed with water to remove any remaining impurities, such as residual alkaline solution.
- Neutralization: The washed curds precipitated from the acidic solution are then adjusted to 7.0 to 9.0.
- Separation: The slurry obtained could go through a step of separation based on particle size using centrifugation or filtration allowing to separate the large insoluble protein particle from the soluble ones. A mesh of 60 to 100 could be used to separate small protein particles from large protein particles when using filtration. The filtrate is then enriched in soluble particles, whereas the retentate is enriched in larger particles which are poorly soluble. The separation could be performed by mechanical or centrifugal filtration.
- The slurry obtained in the previous step is heat treated at a temperature of 70 to 98 °C for 5 to 10 min and cooled to 60 to 70 °C by a heat exchange system.
- Spray-drying: The slurry is finally spray-dried to obtain a protein isolate with no more than 10% humidity.

The non-dairy cheese product of the invention comprises from 5 to 30 wt% of fat with respect to the total weight of the non-dairy cheese product, wherein said fat comprises a mixture of saturated and unsaturated fatty acids and wherein the saturated fatty acid content ranges from 19% to 94 wt% with respect to the total fat content. Preferably, the non-dairy cheese product comprises from 10 to 30 wt% of the fat with respect to the total weight of the non-dairy cheese product. More preferably, the non-dairy cheese product comprises from 20 to 30 wt% of the fat with respect to the total weight of the non-dairy cheese product.

The term "fat" or "lipid" as used herein refers to oils or butters which are primarily composed of triglycerides, i.e. esters of glycerol and three acids which may be the same or different and wherein the acids are fatty acids of varying fatty acid hydrocarbon chain lengths, particularly from a non-dairy fat. Typically, the hydrocarbon chain length of the fatty acid is from 8 to 26 carbon atoms, preferably from 12 to 24 carbon atoms. The fatty acids could be broadly classified as saturated fatty acids - have a linear hydrocarbon chain in their molecular structure with no double or triple bonds, and unsaturated fatty acids - having a branch with one or more double bonds in one or more locations of the hydrocarbon chain, typically from 1 to 6 double bonds, preferably 1 or 2 double bonds. In the context of the present invention, when reference is made to "fatty acyl" or "fatty acyl group" in the fat, it refers to the acyl moiety derived from the fatty acid in the corresponding esters with glycerol when forming the triglyceride, i.e. to the group formed by loss of OH from the carboxy group of the fatty acid. In the current invention, to have sliceable and meltable cheese-like product, inclusion of fats comprising saturated fatty acyl groups having a carbon chain length (including the carbon atom of the -C(=O)-group of the fatty acyl moiety in the ester) of C12:0 to C24:0 in the range of 3.0% (w/w) to 23.5% (w/w) of the total weight of the non-dairy cheese product is advantageous. Examples of saturated fatty acids (and the corresponding fatty acyl groups) are caprylic acid (C8:0), capric acid (C10:0), lauric acid (C12:0), myristic acid (C14:0), palmitic acid (C16:0), stearic acid (C18:0), arachidic acid (C20:0), behenic acid (C22:0), lignoceric acid (C24:0), and cerotic acid (C26:0). Examples of unsaturated fatty acids are myristoleic acid (C14:1), palmitoleic acid (C16:1), sapienic acid (C16:1), oleic acid (C18:1), eladic acid (C18:1), vaccenic acid (C18:1), linoleic acid (C18:2), linoelaidic acid (C18:2), $\alpha$-linolenic acid (C18:3), arachidonic acid (C20:4), eicosapentaenoic acid (C20:5), erucic acid (C22:1), and docosahexaenoic acid (C22:6). The indicated number of carbon atoms includes the carbon of the -C(=O)- group of the fatty acyl moiety in the ester. The number indicated after the ":" refers to the number of "unsaturations", preferably double bonds of the fatty acyl moiety in the ester.

In the present invention, the fat comprises a mixture of saturated and unsaturated fatty acyl groups wherein the saturated fatty acyl content ranges from 19 wt% to 94 wt% with respect to the total fat weight, preferably from 25 wt% to 45 wt% of saturated fatty acyl content, more preferably from 30 wt% to 45 wt% of saturated fatty acyl content, still more preferably from 30 wt% to 40 wt% of saturated fatty acyl content.

The percentage of saturated fatty acyl groups in the fat corresponds to the percentage of saturated fatty acids and unsaturated fatty acids which may be determined using Gas Chromatography of Fatty Acid Methyl Esters (GC-FAME). In this method, the fats undergo a transesterification process that converts fatty acid triglycerides into fatty acid methyl esters (FAMEs). The gas chromatograph, equipped with a flame ionization detector (FID) and a suitable capillary column, separates the FAMEs based on their volatility and interaction with the column’s stationary phase. As the FAMEs exit the

column, they are detected by the FID, producing a chromatogram with peaks that correspond to different fatty acids.

Examples of fats with their corresponding saturated and unsaturated fatty acyl wt% (fatty acyl weight with respect to the total weight of the fat) is given in the table below [USDA FoodData Central. U.S. Department of Agriculture. Available at: https://fdc.nal.usda.gov/. Accessed on [25/6/2024].

| Oil / Fat | Saturated fatty acyl content (wt%) | Unsaturated fatty acyl content (wt%) |
|---|---|---|
| Sunflower oil | 10-12% | 88-90% |
| Shea butter | 45-55% | 45-55% |
| Coconut oil | 82-87% | 12-17% |
| Avocado oil | 10-12% | 88-90% |
| Grape seed oil | 9-10% | 90-91% |
| Olive oil | 13-15% | 83-85% |
| Peanut oil | 16-18% | 78-80% |
| Safflower oil | 5-7% | 93-95% |
| Sesame oil | 14-15% | 85-86% |
| Corn oil | 12-14% | 86-88% |
| Canola oil | 6-8% | 92-94% |
| Soybean oil | 15-17% | 78-80% |
| Linseed (flaxseed) oil | 9-10% | 90-91% |
| Hemp seed oil | 9-10% | 90-91% |
| Almond oil | 8-9% | 91-92% |
| Cocoa butter | 55-65% | 35-45% |
| Palm fat | 45-50% | 50-55% |
| Hydrogenated palm kernel oil | 85-90% | 10-15% |
| Vegetable margarine | 12-16% | 82-88% |

Preferably, the fat is selected from the group consisting of sunflower oil, shea butter, coconut fat or coconut oil, avocado oil, grape seed oil, olive oil, peanut oil, safflower oil, sesame oil, corn oil, canola oil, soybean oil, linseed oil, hemp seed oil, and almond oil, cocoa butter, palm fat, hydrogenated palm kernel oil, vegetable margarine and mixtures thereof. It a particular fat does not have the required content of saturated fatty acyl groups (such as sunflower oil, avocado oil, grape seed oil, olive oil, peanut oil, safflower oil, sesame oil, corn oil, canola oil, linseed oil, hemp seed oil, almond oil and vegetable margarine), it needs to be provide as a mixture with another fat (such as shea butter, coconut oil, cocoa butter, palm fat and hydrogenated palm kernel oil) so that the saturated fatty acyl content of the mixture is within the required range. More preferably the fat is selected form the group consisting of sunflower oil, shea butter, coconut fat or mixtures thereof; more preferably a mixture of sunflower oil and shea butter.

In a particular embodiment, the fat is a mixture of sunflower oil and shea butter in a weight ratio of from 5:1 to 1:5, preferably from 4:1 to 1:4, more preferably from 1:1 to 1:4, still more preferably from 1:1 and 1:2.

The non-dairy cheese product of the invention comprises either from 1.5 to 10 wt% of agar, or from 1 to 10 wt% of in combination with from 0.05 to 0.3 wt% of a hydrocolloid selected from the group consisting of carrageenan, guar gum, locust bean gum, xanthan gum, pectin, alginate and mixtures thereof.

Agar (classified as E406 - food additive) is a polysaccharide which is based on galactose, derived from red algae. The polysaccharides consist of agarose and agaropectin which are polysaccharides based on galactose. Agar is used in various food products as gelling agent. Depending on the source of seaweed the agarose and agaropectin ratios of agar and its molecular chain lengths could vary affecting the gel strength at a given concentration [Rao, A. V., and Inaam A. Bekheet. "Preparation of agar-agar from the red seaweed Pterocladia capillacea off the coast of Alexandria, Egypt." Applied and environmental microbiology 32.4 (1976): 479-482].

Carrageenans are a family of sulphated polysaccharides mainly made up of alternating 3-linked β-D-galactopyranose (G-units) and 4-linked α-D-galactopyranose (D-units) or 4-linked 3,6-anhydro-α-D-galactopyranose (DA-units), forming the disaccharide repeating unit of carrageenans. Carrageenans contain 15-40% ester-sulfate content. Examples

of carrageenans are i-carrageenan, κ-carrageenan, δ-carrageenan, α-carrageenan, μ-carrageenan, β-carrageenan, v-carrageenan, λ-carrageenan, and θ-carrageenan.

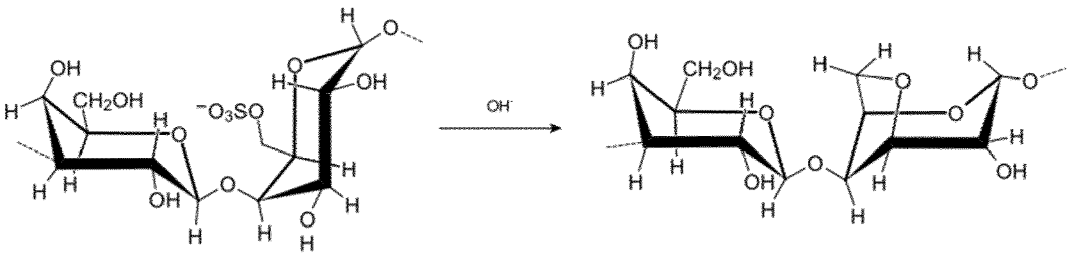


γ-carrageenan β-carrageenan

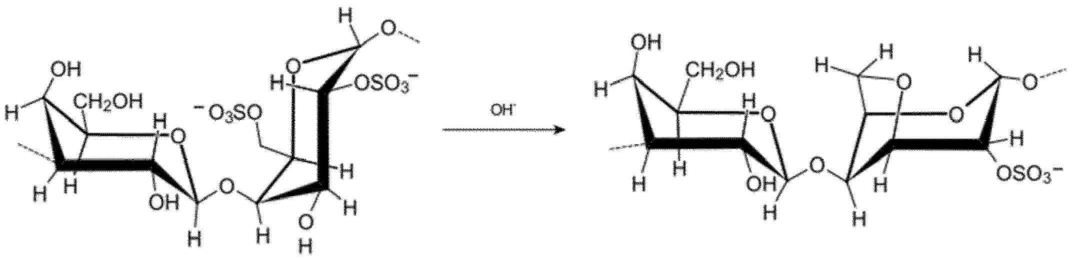


δ-carrageenan α-carrageenan

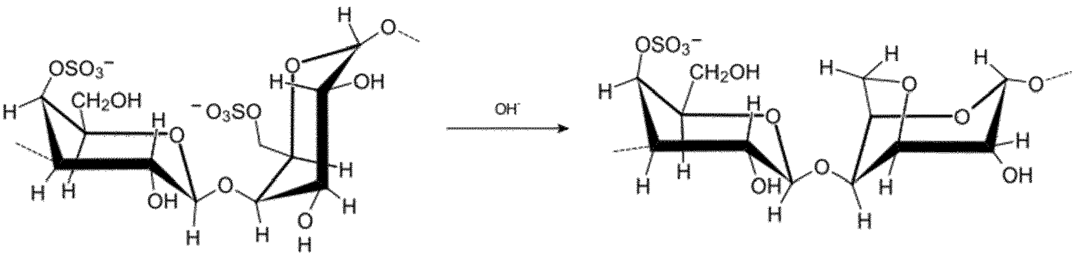


μ-carrageenan κ-carrageenan

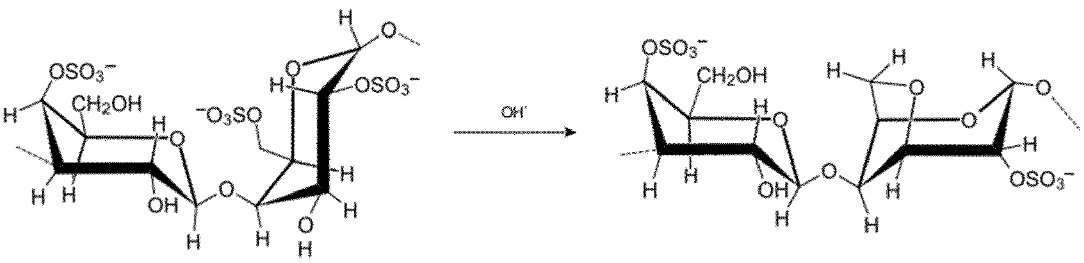


ν-carrageenan ι-carrageenan

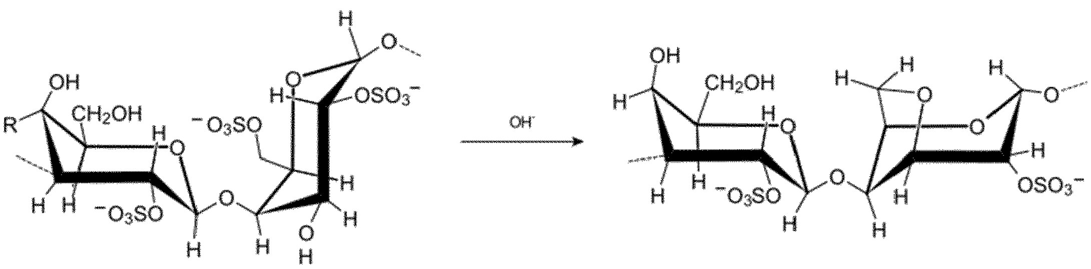


λ-carrageenan θ-carrageenan

Guar gum is an endo-polysaccharide composed of the sugars galactose and mannose. The backbone is a linear chain of β 1,4-linked mannose residues to which galactose residues are 1,6-linked at every second mannose, forming short side-branches.

Locust bean gum (LBG, carob gum, carob bean gum, carobin, E410) is a galactomannan vegetable gum extracted from the seeds of the carob tree. It is a polysaccharide composed of galactose and mannose units combined through glycosidic linkages.

Xanthan gum is a polysaccharide composed of pentasaccharide repeat units, comprising glucose, mannose, and glucuronic acid in the molar ratio 2:2:1.

Pectin is a heteropolysaccharide, a structural acid contained in the primary lamella, in the middle lamella, and in the cell walls of terrestrial plants. The principal chemical component of pectin is galacturonic acid.

Alginate is a salt of alginic acid, generally sodium and/or calcium salt. Alginic acid is a polysaccharide having the structure of a linear copolymer with homopolymeric blocks of (1→4)-linked β-D-mannuronate (M) and α-L-guluronate (G) residues, respectively, covalently linked together in different sequences or blocks. The monomers may appear in homopolymeric blocks of consecutive G-residues (G-blocks), consecutive M-residues (M-blocks) or alternating M and G-residues (MG-blocks). α-L-guluronate is the C-5 epimer of β-D-mannuronate.

In one embodiment, the non-dairy cheese product of the invention comprises from 1.5 to 10 wt% of agar with respect to the total weight of the non-dairy cheese product, preferably from 1.5 to 6 wt%, more preferably from 1.5 to 4%.

In another embodiment, the non-dairy cheese product of the invention comprises from 1 to 10 wt% of agar in combination with from 0.05 to 0.3 wt% of a hydrocolloid selected from the group consisting of carrageenan, guar gum, locust bean gum, xanthan gum, pectin, alginate and mixtures thereof, wherein the weight percentages are expressed with respect to the total weight of the non-dairy cheese product. In another embodiment, the non-dairy cheese product of the invention comprises from 1 to 6 wt% of agar in combination with from 0.05 to 0.3 wt% of a hydrocolloid selected from the group consisting of carrageenan, guar gum, locust bean gum, xanthan gum, pectin, alginate and mixtures thereof, wherein the weight percentages are expressed with respect to the total weight of the non-dairy cheese product. In another embodiment, the non-dairy cheese product of the invention comprises from 1 to 4 wt% of agar in combination with from 0.05 to 0.3 wt% of a hydrocolloid selected from the group consisting of carrageenan, guar gum, locust bean gum, xanthan gum, pectin, alginate and mixtures thereof, wherein the weight percentages are expressed with respect to the total weight of the non-dairy cheese product. In another embodiment, the non-dairy cheese product of the invention comprises from 1 to 10 wt% of agar in combination with from 0.05 to 0.3 wt% of a hydrocolloid selected from the group consisting of carrageenan, guar gum and mixtures thereof, wherein the weight percentages are expressed with respect to the total weight of the non-dairy cheese product. In another embodiment, the non-dairy cheese product of the invention comprises from 1 to 6 wt% of agar in combination with from 0.05 to 0.3 wt% of a hydrocolloid selected from the group consisting of carrageenan, guar gum and mixtures thereof, wherein the weight percentages are expressed with respect to the total weight of the non-dairy cheese product. In another embodiment, the non-dairy cheese product of the invention comprises from 1 to 4 wt% of agar in combination with from 0.05 to 0.3 wt% of a hydrocolloid selected from the group consisting of carrageenan, guar gum and mixtures thereof, wherein the weight percentages are expressed with respect to the total weight of the non-dairy cheese product. In another embodiment, the non-dairy cheese product of the invention comprises from 1 to 10 wt% of agar either in combination with from 0.2 to 0.3 wt% of carrageenan or in combination with from 0.05 to 0.15 wt% of guar gum, wherein the weight percentages are expressed with respect to the total weight of the non-dairy cheese product. In another embodiment, the non-dairy cheese product of the invention comprises from 1 to 6 wt% of agar either in combination with from 0.2 to 0.3 wt% of carrageenan or in combination with from 0.05 to 0.15 wt% of guar gum, wherein the weight percentages are expressed with respect to the total weight of the non-dairy cheese product. In another embodiment, the non-dairy cheese product of the invention comprises from 1 to 4 wt% of agar either in combination with from 0.2 to 0.3 wt% of carrageenan or in combination with from 0.05 to 0.15 wt% of guar gum, wherein the weight percentages are expressed with respect to the total weight of the non-dairy cheese product.

Preferably, when carrageenan is present in the non-dairy cheese product of the invention, it is a i-carrageenan, κ-carrageenan, or mixtures thereof, more preferably i-carrageenan.

The non-dairy cheese product of the invention is devoid of starch.

As used herein, the term "devoid" refers to as being substantially free of the corresponding ingredient, i.e. less than 1 wt.% of the corresponding ingredient with respect to the total weight of the non-dairy cheese product, preferably less than 0.5 wt.%, even more preferably less than 0.1 wt.%, even more preferably 0 wt.%.

The term "starch" as used herein, refers to a polysaccharide which consists of two types of molecules: the linear and helical amylose and the branched amylopectin. Depending on the plant, starch generally contains 20 to 25% amylose and 75 to 80%. Examples of starches are rice starch, potato starch, tapioca starch, wheat starch, maize or corn starch etc.

The non-dairy cheese product of the invention may also be devoid of dextrin. The term "dextrin" as used herein, refers to the polysaccharides obtained by the hydrolysis of starch. The chemical structure of dextrin is a mixture of polymers of D-glucose units linked by α-(1→4) or α-(1→6) glycosidic bonds.

The non-dairy cheese product according to the invention may also be devoid of flour. Examples of flours from

grains are corn flour, spelt flour, wheat flour (all-purpose, cake flour, bread flour, pastry flour, whole wheat, durum wheat semolina flour), chickpea flour, rye flour, potato flour, almond flour, coconut flour, quinoa flour, buckwheat flour, barley flour, rice flour, and oat flour, soy flour, pea flour, fava bean flour, lupine flour etc.

The term "flour" refers to a finely ground powder produced by milling materials, such as grains, seeds, nuts, legumes, tubers, or roots. The resulting flour retains essential nutrients and functional properties, making it suitable for use in food products and containing less than 60% wt of proteins. The term encompasses a variety of non-dairy sources, including but not limited to grains (wheat, corn, rice, oats, barley, and millet), seeds (flaxseed, chia seed, sunflower seed, and hemp seed), nuts (almond, coconut, and hazelnut), legumes (soybean, chickpea, and lentil), tubers and roots (potato, cassava, and arrowroot).

The flour may be produced through conventional milling methods or alternative processes such as grinding, sieving, and drying, and it can be either whole grain or refined. It may also be subjected to further treatments to enhance its properties, such as enzymatic treatment, fortification, or blending with other ingredients to achieve desired nutritional, textural, or functional characteristics for specific applications in the food industry.

The non-dairy cheese product of the invention may be devoid of salt or may further comprise from 0.1 to 5 wt% of a salt selected from the group consisting of NaCl, KCl and mixtures thereof, and/or from 50 to 80 wt% of water, wherein the weight percentages are expressed with respect to the total weight of the non-dairy cheese product.

In one embodiment, the non-dairy cheese product of the invention comprises from 0.1 to 5 wt% of a salt selected from the group consisting of NaCl, KCl and mixtures thereof, and from 50 to 80 wt% of water, wherein the weight percentages are expressed with respect to the total weight of the non-dairy cheese product.

In one embodiment, the non-dairy cheese product of the invention comprises from 0.1 to 5 wt% of a salt selected from the group consisting of NaCl, KCl and mixtures thereof, wherein the weight percentage is expressed with respect to the total weight of the non-dairy cheese product.

In one embodiment, the non-dairy cheese product of the invention comprises from 50 to 80 wt% of water with respect to the total weight of the non-dairy cheese product, preferably from 60 to 70 wt%.

The pH of the non-dairy cheese product is not relevant. Nevertheless, in a particular embodiment, the pH is from 4 to 8, preferably from 4 to 6.5, more preferably from 4.1 to 6.4.

The non-dairy cheese product of the invention may further comprise one or more ingredients selected from the group consisting of colorants, flavoring agents, vitamins, and minerals.

Examples of colorants are Annatto, beetroot powder, caramel color, chlorophyll, carotenoids, Turmeric powder, and Spirulina.

Examples of flavoring agents are herbs and spices, flavor components, extracts, essential oils, sweeteners, and preservatives.

Examples of vitamins are, Vitamin A, B Vitamins, Vitamin C, Vitamin D, Vitamin E and Vitamin K.

Examples of minerals are iron, magnesium, calcium, potassium, selenium, and zinc.

The non-dairy cheese product of the invention is sliceable and meltable.

The "meltability" of the cheese product, as used herein, can be described as the extent to which cheese will flow when heated (Gunasekaran, S., & Ak, M. M. (2002). Cheese rheology and texture. CRC press). Upon heating meltable cheese products these increase there are. The meltability of the cheese products may be assessed by Schreiber's method of meltability analysis following the procedure described in the examples. Thus, the area of a sample of the cheese product before melting, i.e. the pre-melt area, and the area after heating (in particular at 200 °C) at a certain time (in particular 6 minutes), i.e. the melted area, may be compared. The percentage area increases of samples before and after heating is a measure of meltability and hereby referred to as meltability (%):

$$\text{Meltability (\%)} = ((\text{Melted Area} - \text{pre-melt Area}) / \text{pre-melt Area}) \times 100$$

*Equation 3*

The products having meltability (%) higher than or equal to 100% are considered to be meltable and those lower than 100% are considered not meltable. Preferably, the non-dairy cheese product of the invention has a meltability higher than 100%, preferably higher than 150%, more preferably higher than 200%, more preferably higher than 250%, still more preferably higher than 300%.

The "sliceability" of the cheese product, as used herein, refers to the suitability of the cheese product to be sliced. The sliceability of the cheese products may be assessed following the procedure described in the examples, by slicing the product in 2 mm-thick slices with a slicer machine and classifying the quality of the resulting slices according to the grades depicted in Figure 3, wherein grade 1 represents poor sliceability, grade 2 represents average sliceability, grade 3 represents good sliceability and grade 4 represents excellent sliceability. The products having a sliceability score equal to or superior to 3 are considered to be sliceable. The products having a sliceability score inferior to 3 are considered not sliceable. Preferably, the non-dairy cheese product of the invention has a sliceability score equal to or superior to 3.

Process for the manufacture of the non-dairy cheese product

In the second aspect, the invention relates to the process for the manufacture of the non-dairy cheese product according to the first aspect, wherein the process comprises:

a) dissolving the agar and, when present, the hydrocolloid selected from the group consisting of carrageenan, guar gum, locust bean gum, xanthan gum, pectin, alginate and mixtures thereof, in water at a temperature from 60 to 98 °C to obtain a solution;
b) adding the fat to the solution obtained in step a) and emulsifying at a temperature of from 50 to 98 °C to obtain an emulsion;
c) adding the non-dairy protein isolate to the emulsion obtained in step b) and mixing at a temperature of from 50 to 98 °C to obtain a mixture;
d) cooling the mixture obtained in step c) to a temperature of from 4 to 10 °C to provide the non-dairy cheese product.

The first step of the process, step a), is dissolving the agar and, when present, the hydrocolloid selected from the group consisting of carrageenan or guar gum, in water at a temperature from 60 to 98 °C, preferably at a temperature of from 85 to 95 °C, to obtain a solution. If the cheese product of the invention comprises salt, said salt is also dissolved in step a). This step may be carried out by using conventional food processing means such as using a food processor (e.g. bowl chopper, continuous mixer, high-shear batch mixer, emulsion mill, mincer/grinder, stand mixer, blender).
Step b) is adding the fat to the solution obtained in step a) and emulsifying at a temperature of from 50 to 98 °C to obtain an emulsion. Preferably, step b) is carried out at a temperature of from 60 to 80 °C. This step may be carried out by mixing under high shearing, preferably from 1,100 RPM to 2,000 RPM, more preferably from 1,250 RPM to 1,800 RPM. This step may be carried out by using a high-shear mixer.
Step c) is adding the non-dairy protein isolate to the emulsion obtained in step b) and mixing at a temperature of from 50 to 98 °C to obtain a mixture, preferably at a temperature of from 60 to 80 °C. This step may be carried out by using conventional food processing means such as using a food processor (e.g. bowl chopper, continuous mixer, high-shear batch mixer, emulsion mill, mincer/grinder, stand mixer, blender).
Preferably, step c) further comprises shaping the mixture before carrying out step d). The shaping may be carried out by transferring the mixture to a bag having the desired shape, applying vacuum and sealing the bag.
Step d) is cooling the mixture obtained in step c) to a temperature of from 4 to 10 °C to provide the non-dairy cheese product. Step d) can be carried out using any suitable cooling means, such as cooling in cold/ice water baths, chilling rooms, refrigeration, spray chilling, immersion chilling, batch/continuous air coolers, direct contact chillers, vacuum cooling.
In a third aspect, the invention relates to a non-dairy cheese product obtainable by the process according to the second aspect.
In a fourth aspect, the invention relates to a food product comprising the non-dairy cheese product according to the first or third aspect, preferably wherein the food product is selected from the group consisting of pizza, sandwich, cheese stick, burrito, taco, quesadilla, pasta, cheeseburger, cheese sausage, tortilla chips, cheese sauce, fondue, and raclette.
The term "food product" or "food" or "food composition" as used herein refers to a product which is intended and is suitable for ingestion of a human or an animal and provides at least one nutrient to the human or animal.
The following examples represent specific embodiments of the present invention. They do not intend to limit in any way the scope of the invention defined in the present description.

## Examples

### Example 1. Plant protein isolates

Two soy protein isolates were used in this study. They are commercially available and could be obtained following the extraction process described below. The first protein isolate, soy protein isolate 1, is referred to as Soy 1 and the second isolate, Soy protein isolate 2, is referred to as Soy 2.

Example 1.1. Extraction process of soy protein isolate Soy 1

The SPI used in the present invention is commercially available or obtained through a process that comprises alkali solution extraction, separation, acidification, washing, neutralization, heat treatment, cooling and spray drying. The soy protein isolate has at least 85.0 wt. % protein on a dry basis. The detailed extraction process is as follows: The soybeans are first cleaned, cracked, and dehulled to remove the outer shell of the bean.

Defatting: The defatting process removes the oil from the cleaned, cracked, and dehulled soybeans, which helps to concentrate the protein. This is done using hexane. Separation: The resulting mixture of oil and solvent is separated from the remaining solids (the defatted soybean) by centrifugation. Extraction: The defatted soybean fraction obtained from the previous steps and water are mixed in the weight ratio 1:6 at a temperature of approximately 20°C. The alkali solution (sodium hydroxide) is added to adjust the pH to 8.3. The alkali-extracted solution is then separated from the insoluble soybean residues using a centrifuge. The resulting solution contains the dissolved proteins, whilst the solid residue is discarded. Acidification: The extract obtained from the previous step is then acidified to precipitate and form curds at a pH near the isoelectric point of pH 4.7 (pH 4.5 - 4.8). The precipitated proteins form a curd and are then separated by centrifugation. Washing: the curd is washed with water to remove any remaining impurities, such as residual alkaline solution. Neutralization: The washed curds precipitated from solution are then adjusted to pH 8.0. Heating and Spray-drying: The slurry is then heat treated at a temperature of 120°C for 3 min using steam injection and cooled to 60°C. The slurry is finally spray-dried to obtain a soy protein isolate with no more than 6% humidity.

Example 1.2. Extraction process of soy protein isolate Soy 2

Soy 2 protein isolate is produced following the procedure described in Example 1.1, except for the following steps: The alkali-extracted solution is mixed under high shearing for 15-30 min. Moreover, during the acidification process, the pH is adjusted to 4.5. During neutralization, the pH is adjusted to about 7.5.

Example 1.3. Extraction process of pea protein isolate Pea

The pea protein isolate used is commercially available and could be obtained following the extraction process. The pea protein isolate has at least 85.0 wt. % protein on a dry basis. The detailed extraction process is as follows: The yellow peas are first cleaned, cracked, and dehulled to remove the outer shell of the bean. Extraction: The dehulled pea obtained from the previous steps and water are mixed in the weight ratio 1:6 at a temperature of approximately 20°C. The alkali solution (sodium hydroxide) is added to adjust the pH to 8.5. The alkali-extracted solution is then separated from the insoluble pea residues using a centrifuge. The resulting solution contains the dissolved proteins, whilst the solid residue is discarded. Acidification: The extract obtained from the previous step is then acidified to precipitate and form curds at a pH near the isoelectric point of pH 4.5 (pH 4.5 - 4.8). The precipitated proteins form a curd and are then separated by centrifugation. Washing: the curd is washed with water to remove any remaining impurities, such as residual alkaline solution. Neutralization: The washed curds precipitated from solution are then adjusted to pH 7.0. Heating and Spray-drying: The slurry is then heat treated at a temperature of 120°C for 3 min using steam injection and cooled to 60°C. The slurry is finally spray-dried to obtain a pea protein isolate with no more than 6% humidity.

Example 1.4. Extraction process of faba protein isolate Faba 2

Faba 2 is a faba protein isolate that is commercially available and could be obtained following the extraction process. The faba protein isolate has at least 85.0 wt. % protein on a dry basis. The detailed extraction process is as follows: The faba beans are first cleaned, cracked, and dehulled to remove the outer shell of the bean. Extraction: The dehulled faba bean obtained from the previous steps and water are mixed in the weight ratio 1:6 at a temperature of approximately 20°C. The alkali solution (sodium hydroxide) is added to adjust the pH to 8.5. The alkali-extracted solution is then separated from the insoluble soybean residues using a centrifuge. The resulting solution contains the dissolved proteins, whilst the solid residue is discarded. Acidification: The extract obtained from the previous step is then acidified to precipitate and form curds at a pH near the isoelectric point of pH 4.8 (pH 4.5 - 4.8). The precipitated proteins form a curd and are then separated by centrifugation. Washing: the curd is washed with water to remove any remaining impurities, such as residual alkaline solution. Neutralization: The washed curds precipitated from solution are then adjusted to pH 7.0. Heating and Spray-drying: The slurry is then heat treated at a temperature of 120°C for 3 min using steam injection and cooled to 60°C. The slurry is finally spray-dried to obtain a faba protein isolate with no more than 6% humidity.

Example 1.5. Extraction process of faba protein isolate Faba 4

Faba 4 is produced following the procedure described in Example 1.4, except for the following steps: The alkali-extracted solution is mixed under high shearing for 15-30 min. After neutralization the slurry was heated to 80°C for 15 minutes and cooled to 50°C.

Finally, one potato protein isolate was studied. It is commercially available and was provided by Avebe, Veendam, The Netherlands and has the reference of Solanic 200.

**Example 2. Non-dairy protein isolate - Physico-chemical characterization using particle size distribution**

Example 2.1. Method of protein dispersion

Protein dispersions were initially prepared by dispersing the protein-Isolate (PI) powders in distilled water (to achieve 1.0 wt.% protein concentration) along with 0.5% w/w of salt for approximately 1 hour under slow stirring at room temperature using a magnetic stirrer (RT2 Basic, Thermo Fisher Scientific, Waltham, USA). Sodium chloride (NaCl) was initially dissolved in water to achieve 0.5% w/w. The pH of the dispersions was then measured and adjusted to 7.0 using if required 1 M hydrochloric acid or 1 M sodium hydroxide in a drop-by-drop manner and left under slow stirring for 1 hour using a magnetic stirrer (as described above). Protein dispersions were then heat-treated in a water-bath at 70°C for 1 hour. Products were then cooled down in an iced water-bath and left overnight in a 4°C fridge.

Example 2.2. Particle size distribution by Static Light Scattering (SLC) and Dynamic Light Scattering (DLS)

The particle size of the dispersions was determined by laser diffraction using static light scattering (referred to hereafter as SLS).

The dispersions of plant protein isolate (Soy1, Soy 2, Pea, Fava 2 and Fava 4) were analyzed by Static Light Scattering using a Mastersizer 3000 (Malvern Instruments Ltd®, UK).

SLS is a technique that measures the intensity of the scattered light of dispersed particles illuminated by a laser beam. Particles are hit by a red beam light ($\lambda$=633 nm) and a blue beam light ($\lambda$=470 nm) and diffract these in all directions. Large particles diffract light on smaller angles with high intensity, whereas small particles diffract light on wider angles with lower intensity. The formulations were analyzed in triplicate by SLS using a Mastersizer 3000 (Malvern Instruments Ltd®, UK). The results were treated using the Mie theory, which assumes that the particles measured are perfect spheres. The protein dispersion samples (1.0 wt.%) were mixed and dispersed in the LV measuring cell until an obscuration level of 10% was obtained. Measurements were performed in triplicate and the average of the three replicates was reported in the table hereafter.

The volume weighted mean diameter D[4,3] of the protein isolate dispersions at 1.0 wt.% protein concentration at pH 7.0 after heated at 70°C and 0.5 wt% NaCl are gathered in Table 1 below.

*Table 1 Particle size distribution D[4,3] of the protein dispersions (1.0 wt. % proteins, 0.5 wt.% NaCl, pH 7 and heated at 70°C for 1h)*

| *Protein* | Soy 1 | Soy 2 | Pea | Fava 4 | Potato | Fava 2 |
|---|---|---|---|---|---|---|
| *D[4,3] ($\mu$m)* | 130 ± 2 | 108 ± 2 | 101 ± 1 | 84 ± 1 | Gel formed / non measurable | 65 ± 0 |

The diameter D90 of the protein isolate dispersions at 1.0 wt.% protein concentration at pH 7.0 and 0.5 wt% NaCl are gathered in Table 2 below.

*Table 2 D90 of the protein dispersions (1.0 wt. % proteins, 0.5 wt.% NaCl, pH 7 and heated at 70°C for 1h*

| *Protein* | Soy 1 | Soy 2 | Pea | Fava 4 | Potato | Fava 2 |
|---|---|---|---|---|---|---|
| *D90 ($\mu$m)* | 247 ± 3 | 205 ± 3 | 188 ± 2 | 161 ± 1 | Gel formed / non measurable | 138 ± 1 |

In
Table 1, it was observed that once heated at 70°C, Soy 1, Soy 2, Pea, Fava 2 and 4 dispersions had large particle size, with D[4,3] above 50 $\mu$m and under 150 $\mu$m, which is within the limits of our claim. Potato protein dispersion led to the formation of a gel after heating at 70°C, which indicated that the proteins formed large aggregates, which self-assembled to form larger clusters until forming a gel. D90 of Soy 1, Soy 2, Pea, Fava 2 and 4 dispersions were between 120 $\mu$m to 300 $\mu$m. Thus, the proteins have large particle size distribution at 70°C.

**Example 3. Non-dairy protein isolate - Physico-chemical characterization with solubility**

Example 3.1. Method of protein dispersion

The protein dispersions (Soy 1, Soy 2, Pea, Fava 2, 4 and Potato) were produced following the method described in section Example 2.1. The dispersions were taken out of the fridge and left at room temperature for 1 hour. The protein dispersions were then centrifuged at 7500 RPM for 10 minutes using a Sorvall ST 8 centrifuge (Thermo scientific) and the supernatant was collected and passed through 0.45 $\mu$m syringe filter (Branchia) made of polyethylene sulphonate (PES). The filtrate was analyzed for quantifying the protein concentration using Dumas method and the solubility (%) was

calculated using the following formula:

$$Solubility\ (\%) = \frac{Concentration\ of\ protein\ in\ filtrate}{Total\ protein\ concentration\ in\ the\ dispersion}$$

The Dumas method of protein quantification is based on the combustion of the sample, and a subsequent purification of the gases obtained and the measurement of the thermal conductivity of nitrogen gas which is later translated into protein content.

The protein solution (0.5 mg - 1g) was placed in tin foil boat which is placed in combustion chamber and was purged of any atmospheric gas that would have entered the preparation process. Subsequently, the sample is subjected to combustion with oxygen at around 900 -1000°C for a duration of few minutes. After a first filtration of the gases obtained, they pass to a zone of homogenization. An aliquot of the gases obtained passes through copper to remove the oxygen gas and reduce nitrous oxides to nitrogen gas. Next, the gaseous aliquot of the sample passes through a molecular sieve. This molecular sieve retains unwanted gases such as carbon dioxide and water vapor, while nitrogen gas is entrained by a stream of helium gas to a thermal conductivity detection cell. The equipment transforms the signal obtained into a measurement area. Quantification is carried out with interpolation in the calibration curve with EDTA as standard for nitrogen. An interpolation of the sample's (corrected) area is done on the calibration line.

By applying the sample weight factor, the result is obtained in percentage of nitrogen N (%) in the sample. The percentage of protein in the sample is given by the following formula:

$$Protein\ (\%) = N\ (\%)\ x\ f$$

The nitrogen-to-protein conversion factor f is used to convert nitrogen % to protein%. It depends on the amino acid profile of the protein therefore its value is specific to each protein. For the proteins used herein, factor *f* has been obtained from literature according to Table 3 below.

*Table 3 Factor f of the protein sources Soy, Pea, Fava and Potato*

| f | Protein source | Reference |
|---|---|---|
| 5.5 | SOY | Mosse, Jacques. "Nitrogen-to-protein conversion factor for ten cereals and six legumes or oilseeds. A reappraisal of its definition and determination. Variation according to species and to seed protein content." Journal of Agricultural and Food Chemistry 38.1 (1990): 18-24 |
| 5.4 | PEA | Mosse, Jacques. "Nitrogen-to-protein conversion factor for ten cereals and six legumes or oilseeds. A reappraisal of its definition and determination. Variation according to species and to seed protein content." Journal of Agricultural and Food Chemistry 38.1 (1990): 18-24 |
| 6.25 | FAVA | Berrazaga, Insaf, et al. "Formulation, process conditions, and biological evaluation of dairy mixed gels containing fava bean and milk proteins: Effect on protein retention in growing young rats." Journal of dairy science 102.2 (2019): 1066-1082 |
| 6.25 | POTATO | Van Gelder, W. M. J. "Conversion factor from nitrogen to protein for potato tuber protein." Potato Research 24 (1981): 423-425 |

For other proteins, the *f* factor may be obtained from literature or assumed to be 6.25.

<u>Example 3.2. Results</u>

The solubility of the protein isolates is provided in Figure 1. As it can be seen in Figure 1, the different protein isolates are presented and except for fava protein isolate 4 (fava 4), all the protein isolates had a solubility lower than 30%. The influence of the solubility for each of the protein isolates is described in the following example.

**Example 4. Non-dairy cheese product using different plant protein isolates**

The different protein isolates (same as in example 2) were tested for their product performance in this example. A commercial sunflower oil (Mercadona Hacendado, Spain) and sodium chloride was purchased from Mercadona supermarket to be used in this example. Shea butter (Beleaf 508) was obtained from Bunge®, Missouri, USA. Agar (Agar Q.D.)

was obtained from Quimics Dalmau S.L. Barcelona, Spain. Distilled water was used in all the examples below and is referred to as water. The composition of the products prepared in this example is given in Table 4. Each ingredient used is presented as percentage (% w/w) of product except for saturated fatty acyl content which is presented as percentage of total fat content in the product.

*Table 4 Composition of cheese-analogue with varying protein isolates (PI)*

| PI (%) | 10.0 | 12.0 |
|---|---|---|
| Water (%) | 67.0 - 65.0 (depending on PI concentration) | |
| Agar | 2.0 | |
| NaCl (%) | 1.0 | |
| Sunflower oil (%) | 8.0 | |
| Shea butter (%) | 12.0 | |
| Total fat (%) | 20.0 | |
| Saturated fatty acyl (%) in total fat | 34.0 | |

Example 4.1. Preparation of the non-dairy cheese product

The cheese-like product was prepared using a food processor (Thermomix® TM6, Vorwerk, Spain M.S.L., S.C). All the ingredients such as agar (or its mixtures with other hydrocolloids), salt, water, fat mixtures (with required proportion of saturated and unsaturated fatty acids) were first weighed in separate containers. The water, salt, and agar (or its mixture with other hydrocolloids) is taken in Thermomix jar and stirred for 10 minutes at speed 2.5 (300 - 400 RPM) and 95°C until all the hydrocolloids were dissolved in water. Then the stirring is halted to add fat mixture to the hot solution in the jar and the mixture and cools to 70°C, while stirring at soft speed (40 RPM) to melt the solid fraction of fat in the mixture. Then the mixture is stirred/homogenized at speed 5 (1650 RPM) for 2 minutes and stopped. The lid of the jar is removed and quickly the bottom part of the lid and sides of the jar is scraped to incorporate the hydrocolloid/fat emulsion into the jar. The protein isolate is added to emulsion mix and stirred at speed 3 (500 RPM) for 8 minutes at 70°C, while intermittently stopping the stirring and scraping to incorporate the protein powder sticking to the sides of the jar. At the end of 8 minutes, the liquid like emulsion is quickly transferred to vacuum bags (200 × 300 mm) while its warm and vacuum sealed using Zermat BLUESVAC-42+ vacuum sealer. Soon after that, still liquid like emulsion product is shaped to form a cylindrical shape and then allowed to come to room temperature for 30 minutes. Then the product is placed in refrigerator at 4°C to 7°C overnight for agar (or its mixtures with other hydrocolloids) could set to form a gel.

Example 4.2. Texture profile analysis

The elasticity, hardness, and yield point of the resulting products were examined using a Texture Analyser (TA) TA.XT.Plus C (Stable Micro Systems, Surrey, UK). Six cylindrical pieces were cut out of each sample with a height of approximately 3 cm. The samples were investigated using a 4 mm diameter cylinder probe in a "return to start" puncture test on the Exponent Connect (Stable Micro Systems) software. The probe was set to start the test after a 5 g force trigger was detected, then descended 15 mm into the sample before returning to the start position, with pre-test, post-test, and test speed set to 1 mm/s.

Three key points on the texture profile plots were identified and computed to evaluate and compare the texture of analyzed products, those being the hardness, yield point, and Young's modulus. The "hardness" of the sample is taken as the maximum force measured by the probe upon puncturing the sample [Hurler, J., Engesland, A., Poorahmary Kermany, B., & Skalko-Basnet, N. (2012). Improved texture analysis for hydrogel characterization: Gel cohesiveness, adhesiveness, and hardness. Journal of Applied Polymer Science, 180-188]. The "yield point" follows the conventional definition used in the field of materials science, that being the first critical point where the stress strain relationship becomes nonlinear, Indicative of a departure from Hooke's law of elastic deformation [Hu, Jinlian, Bipin Kumar, and Jing Lu, eds. Handbook of Fibrous Materials, 2 Volumes: Volume 1: Production and Characterization/Volume 2: Applications in Energy, Environmental Science and Healthcare . ISBN 978-3-811-14141-1]. Finally, the Young's modulus is taken as the initial slope of the linear region of the stress/strain curve, giving a measure of the elasticity (or stiffness) of the product: i.e. the extent to which the material can be strained without permanent deformation [Bourne, Malcolm. Food texture and viscosity: concept and measurement. Elsevier, 2002]. In general, it is assumed that a higher value of Young's modulus is indicative of a more brittle material and vice versa.

The above parameters including hardness, yield point, and Young's modulus were calculated and analyzed

using user-defined functions written in Matlab (ver. R2022a).

The products with a hardness equal to or superior to an average of 80 g of force are considered positive. The products having a hardness strictly inferior to an average of 80 g of force are considered not suitable for this application.

Example 4.3. Melting profile analysis

The meltability of cheese can be described as the extent to which cheese will flow when heated [Gunasekaran, Sundaram, and M. Mehmet Ak. Cheese rheology and texture. CRC press, 2002]. To assess the meltability of cheeses, we have implemented Schreiber's method of meltability analysis [Kosikowski, Frank V. "Cheese and fermented milk foods." (1977): ix+711pp] described as follows. The cheese-like product was taken from the refrigerator and kept at room temperature for 30 min. Using a steel circular cutter (a cookie cutter) a cylindrical piece was cut with the dimensions 17 mm in height and 16 mm in diameter. Such cylindrical pieces were placed at center of glass petri dish (100mm × 15mm) and placed into the oven in convection mode (for 6 minutes) at 200°C. The oven was preheated to 200°C before placing the samples. Then the samples were taken out of oven to cool it to room temperature and then their pictures were captured with a ruler next to the petri dish for calibrating the size and having the ratio pixels to millimeters. The area occupied by the cheese-like samples in the images (before and after heating in the oven) was analyzed using ImageJ® software. Figure 2 describes an example of the pictures which were subsequently analyzed.

The percentage area increases of samples before and after placing in the oven was used as measure of meltability and hereby referred to as meltability (%)

$$\textit{Meltability (\%)} = ((\textit{Melted Area} - \textit{pre-melt Area}) / \textit{pre-melt Area}) \times 100$$

To avoid inhomogeneity of spatial heat distribution in the oven affecting the sample, three pieces of same sample are placed in separate locations of the oven and the average of the three samples was taken.

The products having meltability (%) higher than or equal to 100% are considered to perform positively and those lower than 100% are considered to perform negatively and are considered not suitable for this application.

Example 4.4. Sliceability analysis

A commercial kitchen slicer machine (Graef® vivo V20) equipped with 170-watt motor was used to slice the prepared cheese-like products after removing them from the refrigerator and keeping them at room temperature for 30 minutes. The slicer was set to size 2 mm for all the samples and five slices were sliced by moving the sample back and forth along with the platform on which it is placed, facing the circular blade. The cylindrical sample is cut into circular slices and then images were captured to assess the grade of the quality of the slices. Four levels of grades were chosen to evaluate the quality of sliceability as shown in Figure 3:

- GRADE 1 (POOR)
  The sample is pasty, not firm and does not retain any shape while being sliced.
- GRADE 2 (AVERAGE)
  The sample breaks partly after being sliced and partially retains the shape.
- GRADE 3 (GOOD)
  The sample and slices retain most of the shape after being sliced and just at the edges there are some slight dents or breaks.
- GRADE 4 (EXCELLENT)
  The sample and slices retain their shape fully after being sliced with no breaks and dents.

The products having a sliceability score equal to or superior to 3 are considered to perform positively. The products having a sliceability score inferior to 3 are considered not suitable for this application.

Example 4.5. Results

The results are presented in Figure 4 showing that except for the protein with solubility > 40% (in this example fava protein isolate 4), the rest of the proteins were tested positive for all the three parameters - hardness, meltability and sliceability. The hardness and sliceability score were the least for Fava 4 with sliceability score of 1, which is lower than threshold value of 2. From Figure 1 in Example 3.2 we found that the solubility (%) of the Fava 4 was superior to 40% at 70°C. The correlation between protein isolate solubility and its effect on product hardness and sliceability was a surprising key factor. The rest of the proteins (Soy 1, Soy 2, Pea, Fava 2 and Potato) had much lower values in solubility (inferior to

30%). Therefore, these protein isolates (Soy 1, Soy 2, Pea, Fava 2 and Potato) were suitable for this application.

**Example 5. Non-dairy cheese product using different agar concentrations**

Example 5.1. Preparation of the non-dairy cheese product

The preparation of the products was done as described in 0. The effect of agar concentration on product performance was evaluated in this example and the composition of the product in the table below. Each ingredient used is presented as percentage (% w/w) of total product except for saturated fatty acyl content which is presented as percentage (% w/w) of total fat content in the product.

*Table 5 Composition of cheese-analogue with varying agar concentrations*

| | | | | | | | | |
|---|---|---|---|---|---|---|---|---|
| Soy 1 PI (%) | 10.0 | | | | | | | |
| Liquid water (%) | 68.5 - 58.0 (depending on agar concentration) | | | | | | | |
| Agar | 0.5 | 1.0 | 1.5 | 2.0 | 6.0 | 8.0 | 10.0 | 11.0 |
| NaCl (%) | 1.0 | | | | | | | |
| Sunflower oil (%) | 8.0 | | | | | | | |
| Shea butter (%) | 12.0 | | | | | | | |
| Total fat (%) | 20.0 | | | | | | | |
| Saturated fatty acyl (%) in total fat | 34.0 | | | | | | | |

Example 5.2. Results

The results are gathered in Figure 5, showing the effect of agar concentration - ranging from 0.5% to 11% agar concentrations - on the textural properties (hardness and Young's modulus) of the product and on its sliceability and meltability. There is a strong impact of agar concentration on the product's hardness, but the Young's modulus also increases which indicates that the product turning more brittle. As a general rule of thumb, a lower Young's modulus is an indication of an elastic gel and higher value is for brittleness. The hardness of the product was too low when agar concentration was equal or under 1.0%, with a value of 46 g at 0.5%. In addition, without agar, it was not possible to obtain a solid product. The meltability was above 100% between 1.0% to 10.0% agar concentration with a peak of 511% at 2.0% agar concentration. Meltability decreased with higher agar concentration. In addition, the sliceability score was positive for agar concentrations from 1.5% to 10.0%, while from 0.0 % to 1.0 % agar was too soft to be sliced without damaging its structure and the 11.0 % agar concentration was too brittle. For all three criterion such as hardness, meltability and sliceability, the concentrations of agar from 1.5% to 10%, when used as the only hydrocolloid, have proved to be positive.

**Example 6. Non-dairy cheese product using different saturated fat concentrations**

Example 6.1. Preparation of the non-dairy cheese product

The preparation of the product was done as described in 0. The effect of saturated fat content on the product performance was evaluated in this example and the composition of the product is as follows. A commercial coconut fat (VitaDór) was purchased from Lidl supermarket to be used in this example. Each ingredient used is presented as percentage (% w/w) of product except for saturated fatty acyl content which is presented as percentage (% w/w) of total fat content in the product.

*Table 6 Composition of cheese-analogue with varying saturated fat content*

| | | | | | | | |
|---|---|---|---|---|---|---|---|
| *Soy 1 PI (%)* | 10.0 | | | | | | |
| *Liquid water (%)* | 67.0 | | | | | | |
| *Agar (%)* | 2.0 | | | | | | |
| *NaCl (%)* | 1.0 | | | | | | |
| *Sunflower oil (%)* | 20.0 | 16.0 | 12.0 | 8.0 | 4.0 | 0.0 | 0.0 |

(continued)

| | | | | | | | |
|---|---|---|---|---|---|---|---|
| *Shea butter (%)* | 0.0 | 4.0 | 8.0 | 12.0 | 16.0 | 20.0 | 0.0 |
| *Coconut fat (%)* | 0.0 | 0.0 | 0.0 | 0.0 | 0.0 | 0.0 | 20.0 |
| *Total fat (%)* | 20.0 | 20.0 | 20.0 | 20.0 | 20.0 | 20.0 | 20.0 |
| *Saturated fatty acyl (%) in total fat* | 11 | 19 | 27 | 34 | 42 | 50 | 94 |

Example 6.2. Results

The results are represented in Figure 6, showing that the presence of saturated fatty acyl groups had positive influence on the product performance in terms of hardness and sliceability. On the other hand, the meltability remained least affected with an overall meltability of approximately 400%. A proportional increase in hardness of the product was observed while increasing saturated fatty acyl content. In the range of 11.0% to 94.0% saturated fatty acyl fraction, while keeping the total fat content of 20.0%, all the products had a hardness above 80 g. In case of sliceability, a minimum of 19% saturated fatty acyl groups is shown to be essential to form a sliceable product (sliceability score > 2). From 19.0 % to 94.0% saturated fatty acyl content, it was observed that the sliceability had a score above or equal to 3. Therefore, for the current invention, 19% to 94% of saturated fatty acyl content of the total fat is needed for positive product performance.

**Example 7. Non-dairy cheese product using different plant-protein isolate concentrations**

Example 7.1. Preparation of the non-dairy cheese product

The preparation of the product was done as described in 0. The effect of protein isolate (PI) concentration on product performance was evaluated in this example and the composition of the product is as follows. Soy 1 PI was used in this example. Each ingredient used is presented as percentage (% w/w) of product except for saturated fatty acyl content which is presented as percentage of total fat content in the product.

*Table 7 Composition of cheese-analogue with varying protein isolate concentrations*

| *Soy 1 PI (%)* | 0.5 | 10.0 | 14.0 | 16.0 | 17.0 |
|---|---|---|---|---|---|
| *Water (%)* | 76.5 - 60.0 (depending on PI %) | | | | |
| *Agar* | 2.0 | | | | |
| *NaCl (%)* | 1.0 | | | | |
| *Sunflower oil (%)* | 8.0 | | | | |
| *Shea butter (%)* | 12.0 | | | | |
| *Total fat (%)* | 20.0 | | | | |
| *Saturated fatty acyl (%) in total fat* | 34.0 | | | | |

Example 7.2. Results

The results are represented in Figure 7, showing that there is a proportional increase in hardness with increasing PI concentration. A higher content of proteins in the product contributes to the increase of the hardness. Between 0.5 % to 17.0 % SPI, the hardness of the products was superior to 80 g. Meltability showed a proportional decrease with increasing protein content. The results show that between 0.5 % to 16 % PI concentration, the meltability was superior to 100 % with a minimum of 112 % at 16.0 % PI concentration. However, the product with 17% PI did not melt sufficiently with a value (71 %) lower than the threshold reference of 100 %. Finally, the sliceability score was the highest at concentration of 0.5% while it decreased with increasing concentrations of PI. The highest protein concentration for which the sliceability was still acceptable is 16 %. With 17% PI, the product was not sliceable. Therefore, for the current invention, 0.5% to 16% PI concentration is required for a positive product performance.

**Example 8. Non-dairy cheese product using different fat content concentrations**

Example 8.1. Preparation of the non-dairy cheese product

The preparation of the product was done as described in 0. In this example, the effect of total fat concentration on product performance was evaluated. Mixtures of sunflower oil and shea butter with varying ratios were used in the product composition as described in the table hereafter. Each ingredient used is presented as percentage (% w/w) of product except for saturated fatty acyl content which is presented as percentage of total fat content in the product.

*Table 8 Composition of cheese-analogue with varying total fat content*

| | | | | | | |
|---|---|---|---|---|---|---|
| *Pea 1 PI (%)* | 12.0 | | | | | |
| *Water (%)* | 67.0 | | | | | |
| *Agar (%)* | 2.0 | | | | | |
| *NaCl (%)* | 1.0 | | | | | |
| *Sunflower oil (%)* | 0.0 | 2.0 | 4.0 | 8.0 | 12.0 | 14.0 |
| *Shea butter (%)* | 0.0 | 3.0 | 6.0 | 12.0 | 18.0 | 21.0 |
| *Total fat (%)* | 0.0 | 5.0 | 10.0 | 20.0 | 30.0 | 35.0 |
| *Saturated fatty acyl (%) in total fat* | 0.0 | 34.0 | 34.0 | 34.0 | 34.0 | 34.0 |

Example 8.2. Results

The results are shown in Figure 8. The overall outcome of Figure 8 describes a tendency of the hardness to increase with the increase of fat content. Moreover, the hardness of all the products made of 0.0 % to 35.0 % fat have hardness above 80 g with a lower value of 111.3 g at 0.0 % fat, meaning that the softest product is the non-fatted recipe. Furthermore, the non-fatted product did not exhibit meltability once heated. In fact, the percentage increase of surface was 0 meaning that the product did not melt. This example shows that the presence of fat is required to allow melting once heated. In terms of meltability, the products containing from 5.0 % to 35.0 % exhibits high meltability of at least 300 %. On the other hand, the sliceability was equal or above 3 for recipes containing between 5.0 % to 30.0 %. Once the fat was added at 35%, sliceability drastically decreased to a score of 2 being a low performance. Besides, the non-fatted recipe had a low score of sliceability of 1, which is under the lower limit of 3.

To sum up, a total fat content of minimum 5.0 % and maximum 30.0 % is required to achieve a positive product performance in this current invention.

**Example 9. Non-dairy cheese product using different hydrocolloids**

Example 9.1. Preparation of the non-dairy cheese product

The preparation of the product was done as described in 0. The effect of different hydrocolloids on product performance was assessed in this example and the composition of the products is described in the table. The hydrocolloids used in this example are κ-carageenan (κ-cg) obtained from Ingredissimo®, Barcelona, Spain and the agar was obtained from two different providers: 1) Agar (Q-Sol) from Hispanagar, Burgos, Spain and 2) Agar (Q.D.) from Quimics Dalmau S.L. Barcelona, Spain. Agar (Q.D.) is used in all the other examples in this current invention. Each ingredient used in this example is presented as percentage (% w/w) of product except for saturated fatty acyl content which is presented as percentage of total fat content in the product.

*Table 9 Composition of cheese-analogue with different hydrocolloids*

| | | | | |
|---|---|---|---|---|
| *Soy 1 PI (%)* | 10.0 | | | |
| *Hydrocolloids (%)* | K-carageenan (0.5 %) | K-carageenan (2.0 %) | Agar (Q-Sol) (2.0 %) | Agar (Q.D.) (2.0 %) |
| *Water (%)* | 76.5 - 60.0 (depending on PI %) | | | |
| *NaCl (%)* | 1.0 | | | |
| *Sunflower oil (%)* | 8.0 | | | |
| *Shea butter (%)* | 12.0 | | | |

(continued)

| | |
|---|---|
| *Total fat (%)* | 20.0 |
| *Saturated fatty acyl (%) in total fat* | 34.0 |

Example 9.2. Results

The results are shown in Figure 9. Figure 9 shows that (Q-sol) Agar, Agar (Q.D.) and κ-carageenan had hardness values above 80 g. In terms of meltability, all the products were above 100 % except for the recipe containing κ-carageenan 2.0 % which was not significantly above 100 %, due to its high standard deviation of ± 56 %. Furthermore, the critical parameter affected by the type of hydrocolloids is the sliceability score. It was observed that κ- carageenan had low performance for this application, with a score of 1 at 2.0 % κ- carageenan and a score of 2 at 0.5 % κ- carageenan, being under the limit of acceptability.

In addition, the results show that agar significantly perform better than κ-carageenan in terms of hardness with more than 200 g of force, in terms of meltability with a value of more than 300 % and with a sliceability score equal or above 3.0. κ-carageenan as the only hydrocolloid did not meet the requirements of the product quality of the current invention for the two concentrations (0.5% and 2%). Hence, for this current invention, the presence of agar is essential to achieve a positive product performance.

**Example 10. Non-dairy cheese product using different combinations of hydrocolloids**

Example 10.1. Preparation of the non-dairy cheese product

The preparation of the product was done as described in 0. The effect of different hydrocolloids on product performance was evaluated in this example and the composition of the products is described in the table. The hydrocolloids used in this example are κ-carageenan (κ-cg) and i-carageenan (i-cg) obtained from Ingredissimo®, Barcelona, Spain and guar gum obtained from Dabur India limited, Ghaziabad, India. Each of these hydrocolloids was used separately, in combination with Agar (Q.D.). Each ingredient used in this example is presented as percentage (% wt) of product except for saturated fatty acyl content which is presented as percentage of total fat content in the product.

*Table 10 Composition of cheese-analogue with varying mixtures of hydrocolloids with agar (%, expressed in % wt)*

| *Soy 1 PI (%)* | 10.0 | | | | |
|---|---|---|---|---|---|
| *Agar 1(%) + other hydrocolloid (%)* | No hydrocolloid | Guar gum (0.1 %) | Guar gum (0.5 %) | K-carrageena n (0.25%) | I - carageenan (0.25%) |
| *Water (%)* | 68.0 - 67.5 (depending on other hydrocolloid %) | | | | |
| *NaCl (%)* | 1.0 | | | | |
| *Sunflower oil (%)* | 8.0 | | | | |
| *Shea butter (%)* | 12.0 | | | | |
| *Total fat (%)* | 20.0 | | | | |
| *Saturated fatty acyl (% w/w total fat)* | 34.0 | | | | |

Example 10.2. Results

The results are shown in Figure 10. All the recipes described in Figure 10 showed positive performance in terms of hardness with values of at least 80 g of force, with a maximum when agar was combined with 0.25% κ-cg (128 g of force). The hardness levels were slightly lower for mixtures with guar gum and i-cg compared to agar concentration alone. On the other hand, when agar was mixed with 0.25% κ-cg, hardness did not significantly changed compared to recipes containing only agar as hydrocolloid. Furthermore, meltability was also superior to 100 % for all the recipes, with a highest value of 733 % when agar and i-cg were combined. Surprisingly, the key parameter affected by the combination of hydrocolloids is sliceability. In fact, the recipe containing solely agar is under performing with a sliceability score of 1.0, but when i-cg (0.25 % wt), κ-cg (0.25 %wt) or guar gum (0.1 % wt) were combined to agar (1.0 %wt), the sliceability score significantly increased to 3.0 or higher. Although, the addition of guar gum at 0.5 % did not favor the sliceability score (value of 1.5).

Thus, the present example shows that addition of κ-cg, i-cg and guar gum (up to 0.3 %wt) along with agar (1.0 %wt) could enhance product performance allowing to reach the desired properties.

**Example 11. Non-dairy cheese product with and without addition of starch**

Example 11.1. Preparation of the non-dairy cheese product

The preparation of the product was done as described in 0. The effect of different starch concentrations on product performance was assessed in this example and the composition of the products is given in table below. A commercial tapioca starch (Yoki Manioc Starch Polvilho Doce) purchased from local supermarket in Barcelona, Spain was used in this example. Each ingredient used in this example is presented as percentage (% w/w) of product except for saturated fatty acyl content which is presented as percentage of total fat content in the product.

*Table 11 Composition of cheese-analogue with varying starch content*

| *Soy 1 PI (%)* | 10.0 | | |
|---|---|---|---|
| *Starch (%)* | 2.0% | 5.0% | 10.0% |
| *Water (%)* | 66.5 - 57.0 (depending on starch %) | | |
| *Agar (%)* | 2.0 | | |
| *NaCl (%)* | 1.0 | | |
| *Sunflower oil (%)* | 8.0 | | |
| *Shea butter (%)* | 12.0 | | |
| *Total fat (%)* | 20.0 | | |
| *Saturated fatty acyl (%) in total fat* | 34.0 | | |

Example 11.2. Results

The results are shown in Figure 11. Figure 11 shows that hardness strongly decreases with the increase of starch in the recipe. The hardness was weakened by the addition of starch. For concentrations 5.0 % and 10.0 %, it was not possible to measure using the texture analyser since the final products were too pasty. On the other hand, hardness was still above limit of acceptability for starch concentration at 2.0 %. In addition, like the hardness, the meltability was acceptable for starch concentration at 2.0 %. Products were not measurable by Schreiber's test for starch concentration above 2.0 %. Finally, the sliceability performance was the most affected by the addition of starch. When starch was added at 2.0% wt or more, sliceability score was inferior or equal to 2.0 which is under the acceptable score. The presence of starch proved to be detrimental to the product performance. Therefore, in this invention the product should be devoid of starches.

**Example 12. Non-dairy cheese product at various pH levels**

Example 12.1. Preparation of the non-dairy cheese product

The preparation of the product was done as described in 0. The effect of pH on product performance was assessed in this example and the composition of the products is given in table below. To vary the pH of the products, lemon juice concentrate (with an average °Brix of 53 and an acidity of 37%) was added in a drop by drop manner to the mix while stirring, 3 minutes after adding protein isolate powder. Each ingredient used in this example is presented as percentage (% w/w) of product except for saturated fatty acyl content which is presented as percentage of total fat content in the product.

*Table 12 Composition of cheese-analogue with varying pH*

| *Soy 1 PI (%)* | 10.0 | | | | |
|---|---|---|---|---|---|
| *Water (%)* | 65.0 | 64.5 | 64.0 | 63.0 | 62.0 |
| *Lemon juice concentrate (%)* | 0 | 0.5 | 1.0 | 2.0 | 3.0 |
| *pH* | 6.4 | 5.5 | 5.1 | 4.5 | 4.1 |

(continued)

| | |
|---|---|
| *Soy 1 PI (%)* | 10.0 |
| *Agar (%)* | 2.0 |
| *NaCl (%)* | 1.0 |
| *Sunflower oil (%)* | 8.0 |
| *Shea butter (%)* | 12.0 |
| *Total fat (%)* | 20.0 |
| *Saturated fatty acyl (%) in total fat* | 34.0 |

Example 12.2. Results

The results are presented in Figure 12. Figure 12 shows that pH did not significant impact the product performance. Hardness and meltability slightly increased with decreasing pH. The sliceability remained equal or above 3.0 for pH from 4.1 to 6.4. This shows that this current invention could be applied for a wide range of pH for cheese like products ranging from 4.0 to 8.0.

## Claims

**1.** Non-dairy cheese product comprising:

i) from 0.5 to 16 wt% of a non-dairy protein isolate having a solubility lower than 40%, wherein the solubility is determined by dispersing 1.0 wt% of said non-diary protein isolate in water with 0.5 wt% NaCl at 70 °C and pH 7;
ii) from 5 to 30 wt% of fat, wherein said fat comprises a mixture of saturated and unsaturated fatty acyl groups and wherein the saturated fatty acyl content in said fat ranges from 19% to 94 wt% with respect to the total fat weight;
iii) either from 1.5 to 10 wt% of agar, or

from 1 to 10 wt% of agar in combination with from 0.05 to 0.3 wt% of a hydrocolloid selected from the group consisting of carrageenan, guar gum, locust bean gum, xanthan gum, pectin, alginate and mixtures thereof;

wherein the non-dairy cheese product is devoid of starch, and
wherein the weight percentages are expressed with respect to the total weight of the non-dairy cheese product.

**2.** Non-dairy cheese product according to claim 1, wherein the non-dairy protein has a volume weighted mean diameter D[4,3] of from 40 to 250 μm and/or a solubility lower than 30%, wherein said volume weighted mean diameter D[4,3] and said solubility are determined by dispersing 1wt% of the non-dairy protein isolate in water with 0.5 wt% NaCl at 70 °C and pH 7.

**3.** Non-dairy cheese product according to claim 1 or 2, wherein the non-dairy protein isolate concentration is from 10 wt% to 16 wt% with respect to the total weight of the non-dairy cheese product.

**4.** Non-dairy cheese product according to any one of the preceding claims, wherein the non-dairy protein isolate is selected from the group consisting of legume protein isolates, including from soybeans, peas, lentils, chickpeas, black beans, kidney beans, mung beans, fava beans, pinto beans, lupin; grain protein isolates, including from maize/corn meal, millet, rice, wheat/seitan (including gluten), barley, oat, spelt, and teff; seed protein isolates, including from buckwheat, quinoa, amaranth, chia, flax, hemp, sunflower, and pumpkin; nut protein isolates, including from walnuts, almonds, and cashews; bacterial protein isolates, including spirulina; vegetable protein isolates, including from broccoli, spinach, asparagus, artichoke, potato, sweet potato, and brussels sprouts; fruit protein isolates, including from guava, cherimoyas, blueberries, blackberries, nectarines, and bananas; fungal protein isolates, including mycoprotein; and mixtures thereof; more preferably wherein the non-dairy protein is selected from the group consisting of soy protein isolate, pea protein isolate, fava protein isolate, potato protein isolate and mixtures thereof.

**5.** Non-dairy cheese product according to any one of the preceding claims, wherein the fat concentration is from 20 to 30 wt% with respect to the total weight of the non-dairy cheese product.

6. Non-dairy cheese product according to any one of the preceding claims, wherein the saturated fatty acyl content of is preferably from 25 wt% to 45 wt%, more preferably from 30 wt% to 40 wt%, with respect to the total fat weight.

7. Non-dairy cheese product according to any one of the preceding claims, wherein the fat is selected from the group consisting of olive oil, sunflower oil, peanut oil, safflower oil, sesame oil, corn oil, canola oil, soybean oil, linseed oil, castor oil, Tung oil, hemp seed oil, and almond oil, shea butter, coconut fat and mixtures thereof; preferably a mixture of sunflower oil and shea butter.

8. Non-dairy cheese product according to any one of the preceding claims, wherein the agar concentration is from 1.5 to 6 wt%, preferably 1.5 to 4%, with respect to the total weight of the non-dairy cheese product.

9. Non-dairy cheese product according to any one of claims 1 to 7, comprising from 1 to 6 wt% of agar, preferably 1 to 4% of agar, and further comprising from 0.05 to 0.3 wt% of carrageenan, guar gum or mixtures thereof, wherein the weight percentages are expressed with respect to the total weight of the non-dairy cheese product.

10. Non-dairy cheese product according to any one of the preceding claims, further comprising from 0.1 to 5 wt% of a salt selected from the group consisting of NaCl, KCl and mixtures thereof, and/or from 50 to 80 wt% of water wherein the weight percentages are expressed with respect to the total weight of the non-dairy cheese product.

11. Non-dairy cheese product according to any one of the preceding claims, further comprising one or more ingredients selected from the group consisting of colorants, flavoring agents, vitamins, and minerals.

12. Process for the manufacture of a non-dairy cheese product according to any one of the preceding claims, wherein the process comprises:

a) dissolving the agar and, when present, the hydrocolloid selected from the group consisting of carrageenan, guar gum, locust bean gum, xanthan gum, pectin, alginate and mixtures thereof, in water at a temperature from 60 to 98 °C to obtain a solution;
b) adding the fat to the solution obtained in step a) and emulsifying at a temperature of from 50 to 98 °C to obtain an emulsion;
c) adding the non-dairy protein isolate to the emulsion obtained in step b) and mixing at a temperature of from 50 to 98 °C to obtain a mixture;
d) cooling the mixture obtained in step c) to a temperature of from 4 to 10 °C to provide the non-dairy cheese product.

13. Process according to claim 12, wherein step c) further comprises shaping the mixture before carrying out step d).

14. Non-dairy cheese product obtainable by the process according to any of claims 12 or 13.

15. Food product comprising the non-dairy cheese product according to any one of claims 1 to 11 or 14, preferably wherein the food product is selected from the group consisting of pizza, sandwich, cheese stick, burrito, taco, quesadilla, pasta, cheeseburger, cheese sausage, tortilla chips, cheese sauce, fondue, and raclette.

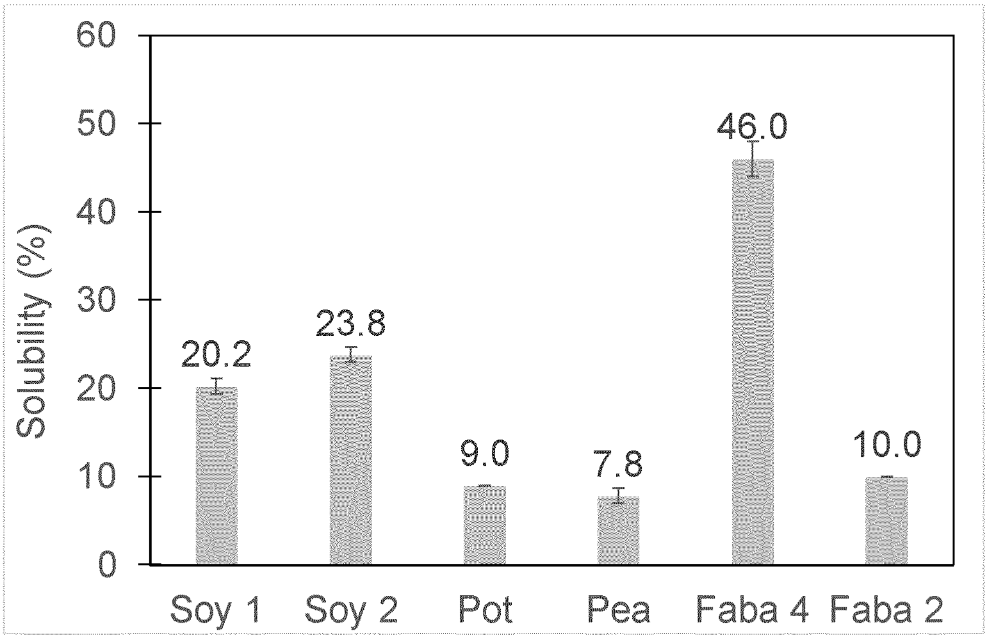


**FIG. 1**

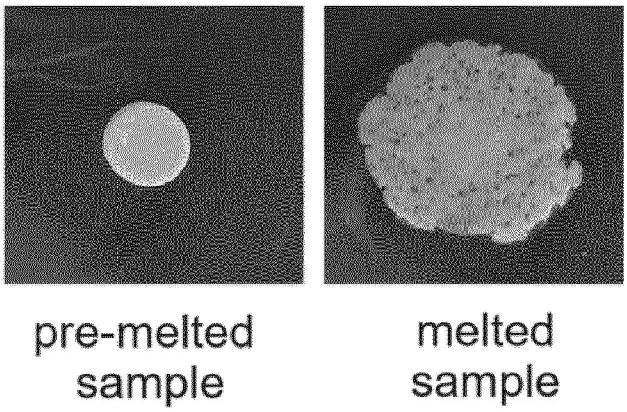


**FIG. 2**

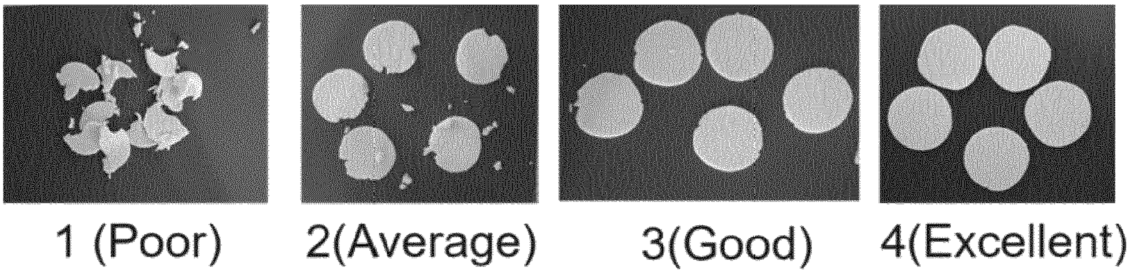


**FIG. 3**

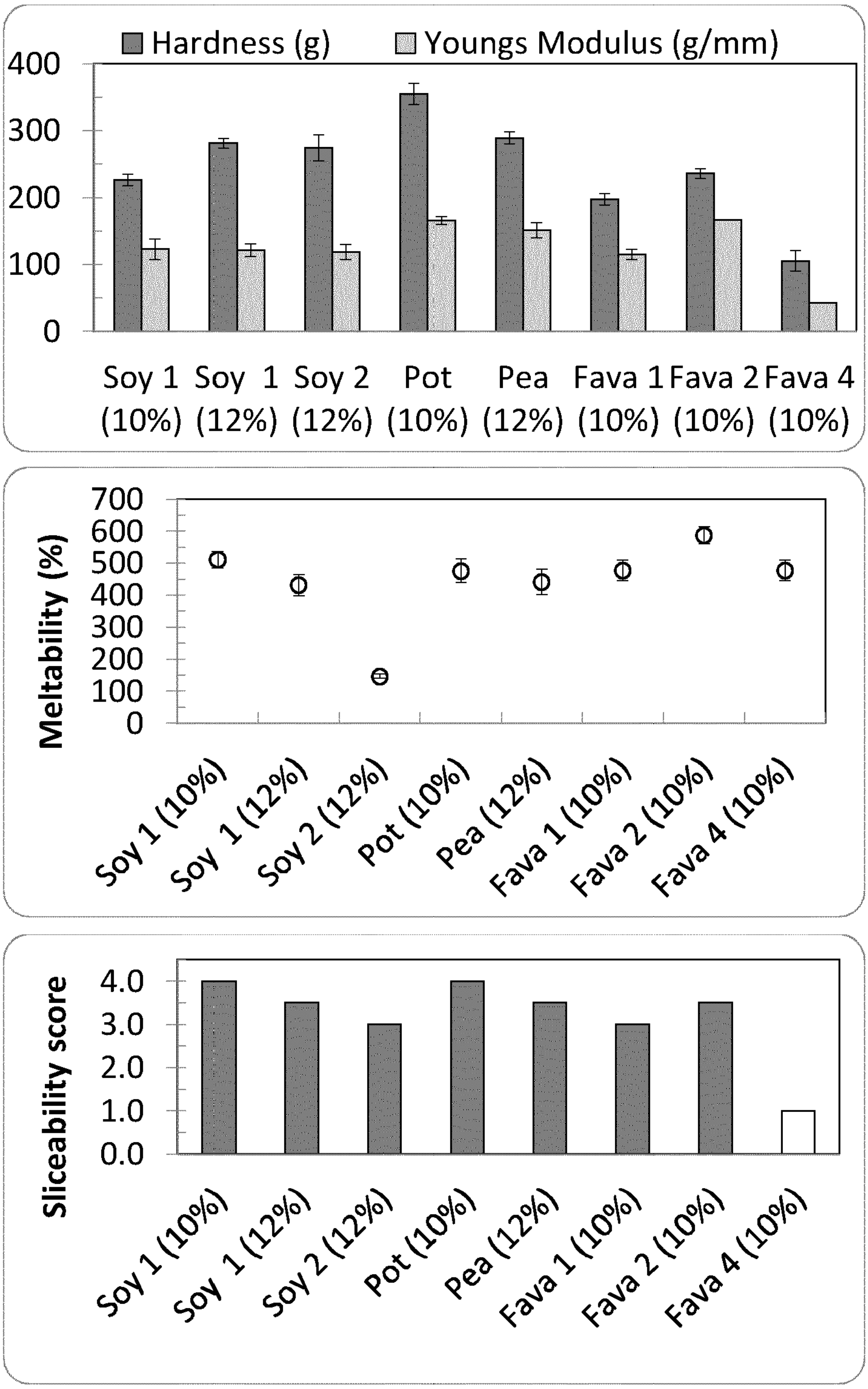
Hardness (g)
Youngs Modulus (g/mm)
400
300
200
100
0
Soy 1 (10%)
Soy 1 (12%)
Soy 2 (12%)
Pot (10%)
Pea (12%)
Fava 1 (10%)
Fava 2 (10%)
Fava 4 (10%)
Meltability (%)
700
600
500
400
300
200
100
0
Sliceability score
4.0
3.0
2.0
1.0
0.0

FIG. 4

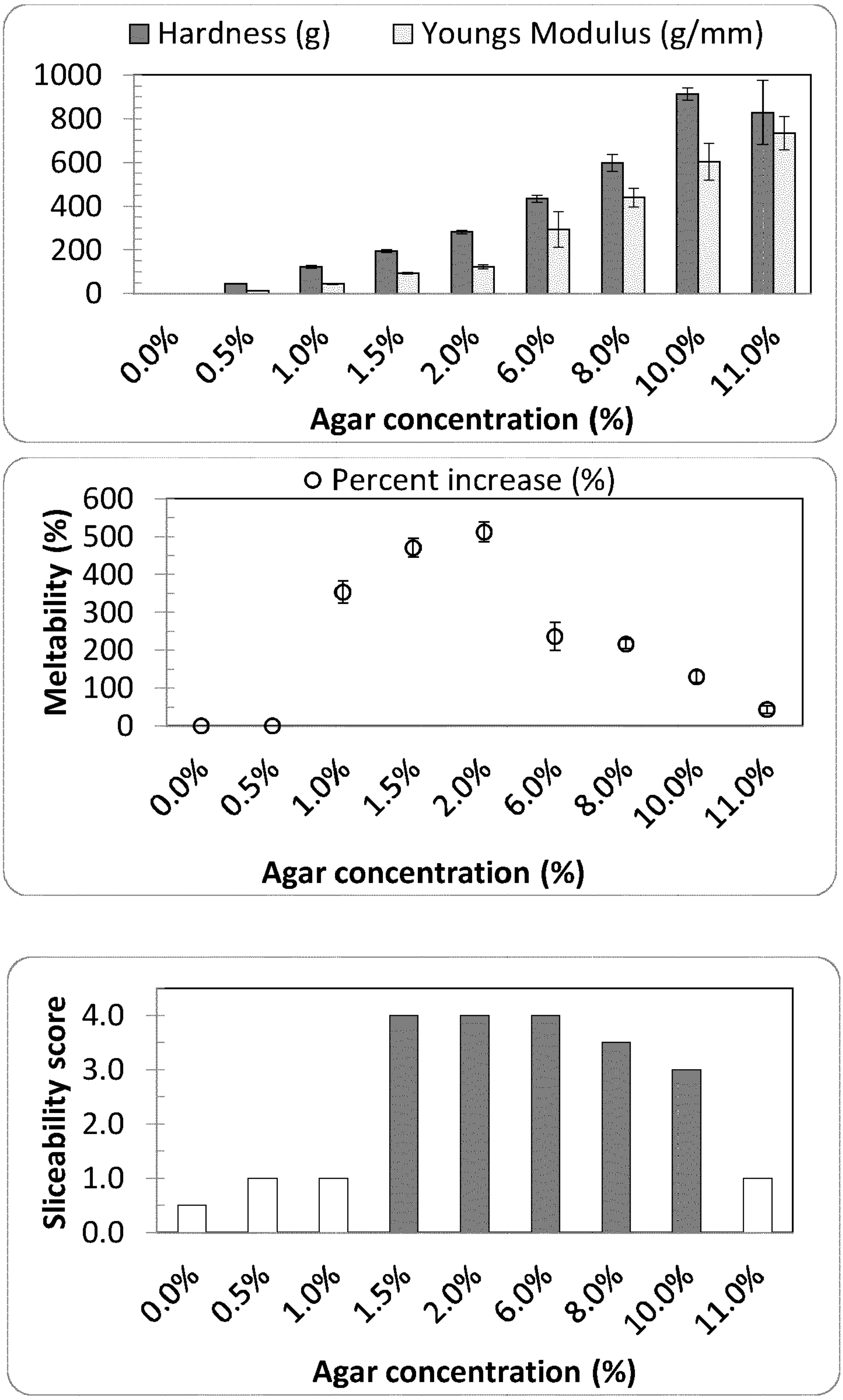
Hardness (g)
Youngs Modulus (g/mm)
1000
800
600
400
200
0
0.0%
0.5%
1.0%
1.5%
2.0%
6.0%
8.0%
10.0%
11.0%
Agar concentration (%)
Percent increase (%)
Meltability (%)
600
500
400
300
200
100
0
0.0%
0.5%
1.0%
1.5%
2.0%
6.0%
8.0%
10.0%
11.0%
Agar concentration (%)
Sliceability score
4.0
3.0
2.0
1.0
0.0
0.0%
0.5%
1.0%
1.5%
2.0%
6.0%
8.0%
10.0%
11.0%
Agar concentration (%)

FIG. 5

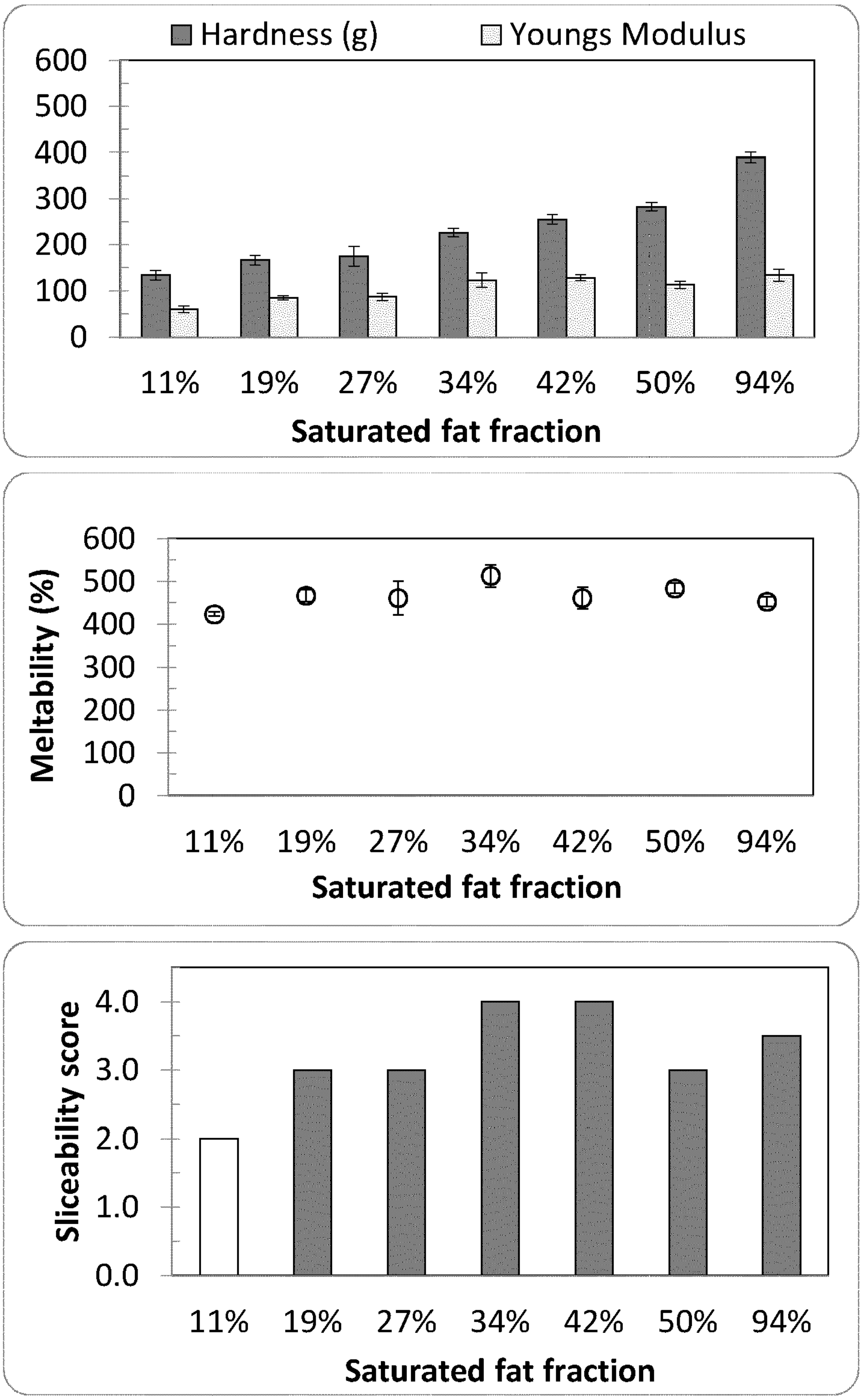
Hardness (g)
Youngs Modulus
600
500
400
300
200
100
0
11%
19%
27%
34%
42%
50%
94%
Saturated fat fraction
Meltability (%)
600
500
400
300
200
100
0
11%
19%
27%
34%
42%
50%
94%
Saturated fat fraction
Sliceability score
4.0
3.0
2.0
1.0
0.0
11%
19%
27%
34%
42%
50%
94%
Saturated fat fraction

FIG. 6

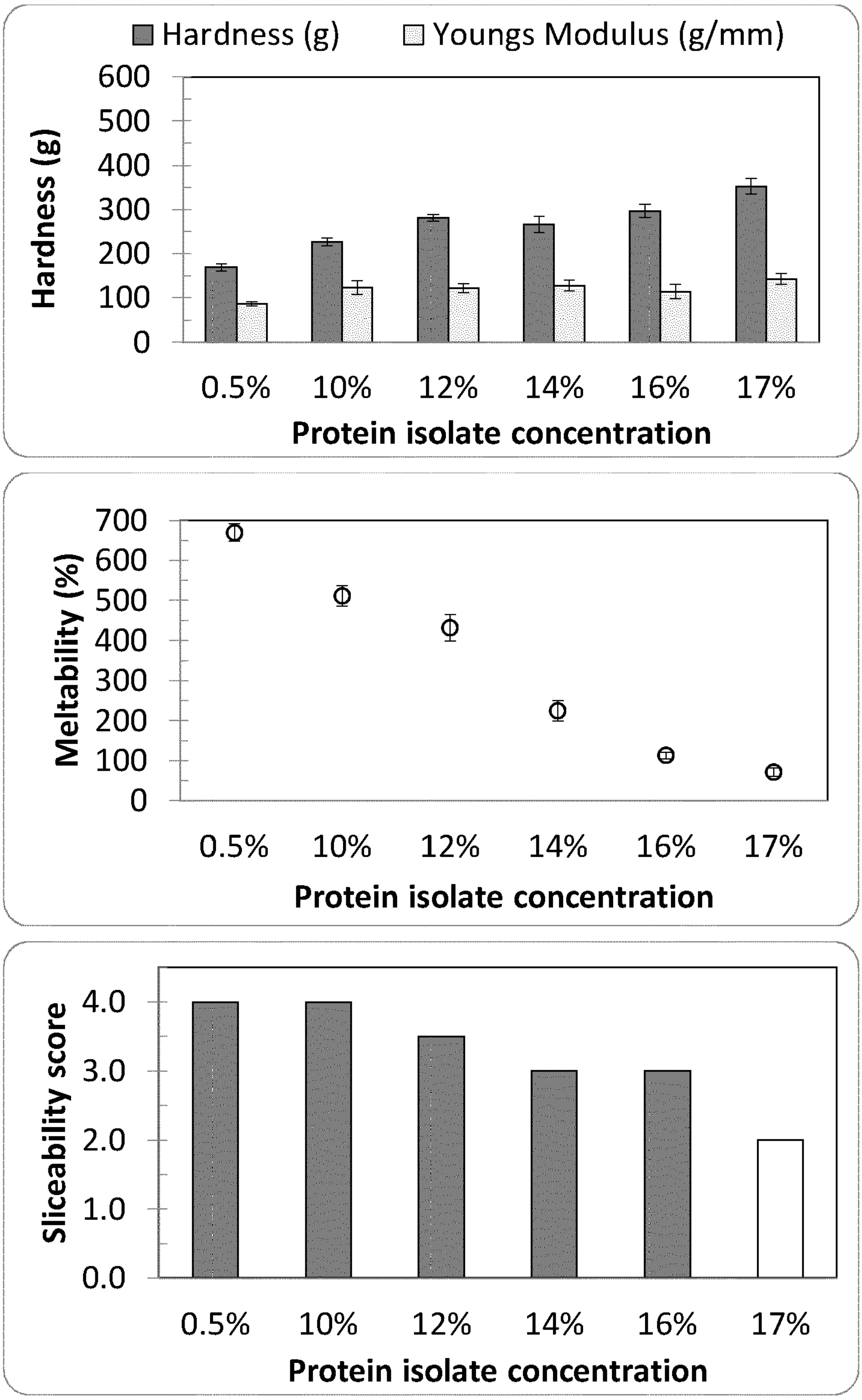
Hardness (g)
Youngs Modulus (g/mm)
Hardness (g)
600
500
400
300
200
100
0
0.5%
10%
12%
14%
16%
17%
Protein isolate concentration
Meltability (%)
700
600
500
400
300
200
100
0
0.5%
10%
12%
14%
16%
17%
Protein isolate concentration
Sliceability score
4.0
3.0
2.0
1.0
0.0
0.5%
10%
12%
14%
16%
17%
Protein isolate concentration

FIG. 7

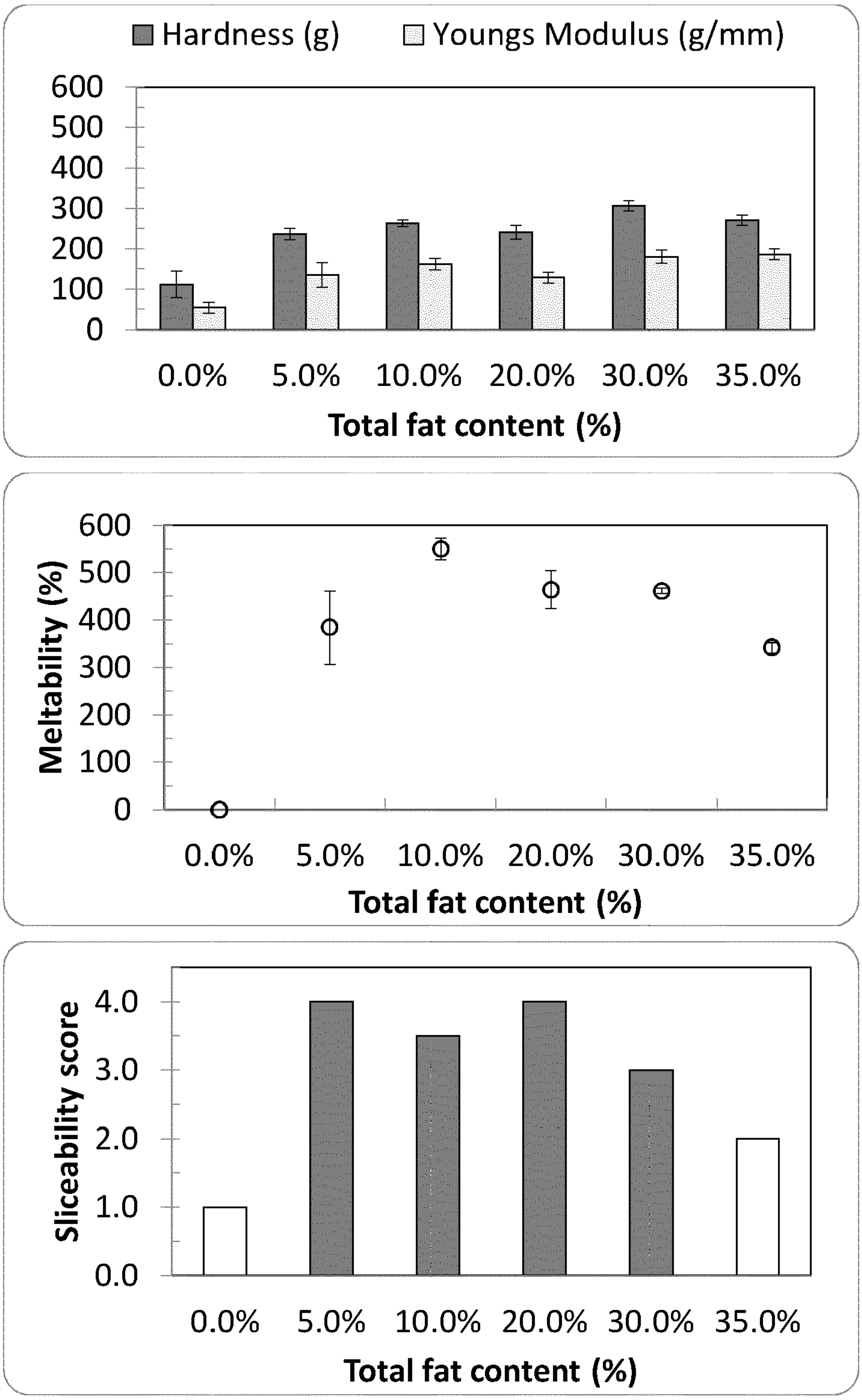
Hardness (g)
Youngs Modulus (g/mm)
600
500
400
300
200
100
0
0.0%
5.0%
10.0%
20.0%
30.0%
35.0%
Total fat content (%)
Meltability (%)
600
500
400
300
200
100
0
0.0%
5.0%
10.0%
20.0%
30.0%
35.0%
Total fat content (%)
Sliceability score
4.0
3.0
2.0
1.0
0.0
0.0%
5.0%
10.0%
20.0%
30.0%
35.0%
Total fat content (%)

FIG. 8

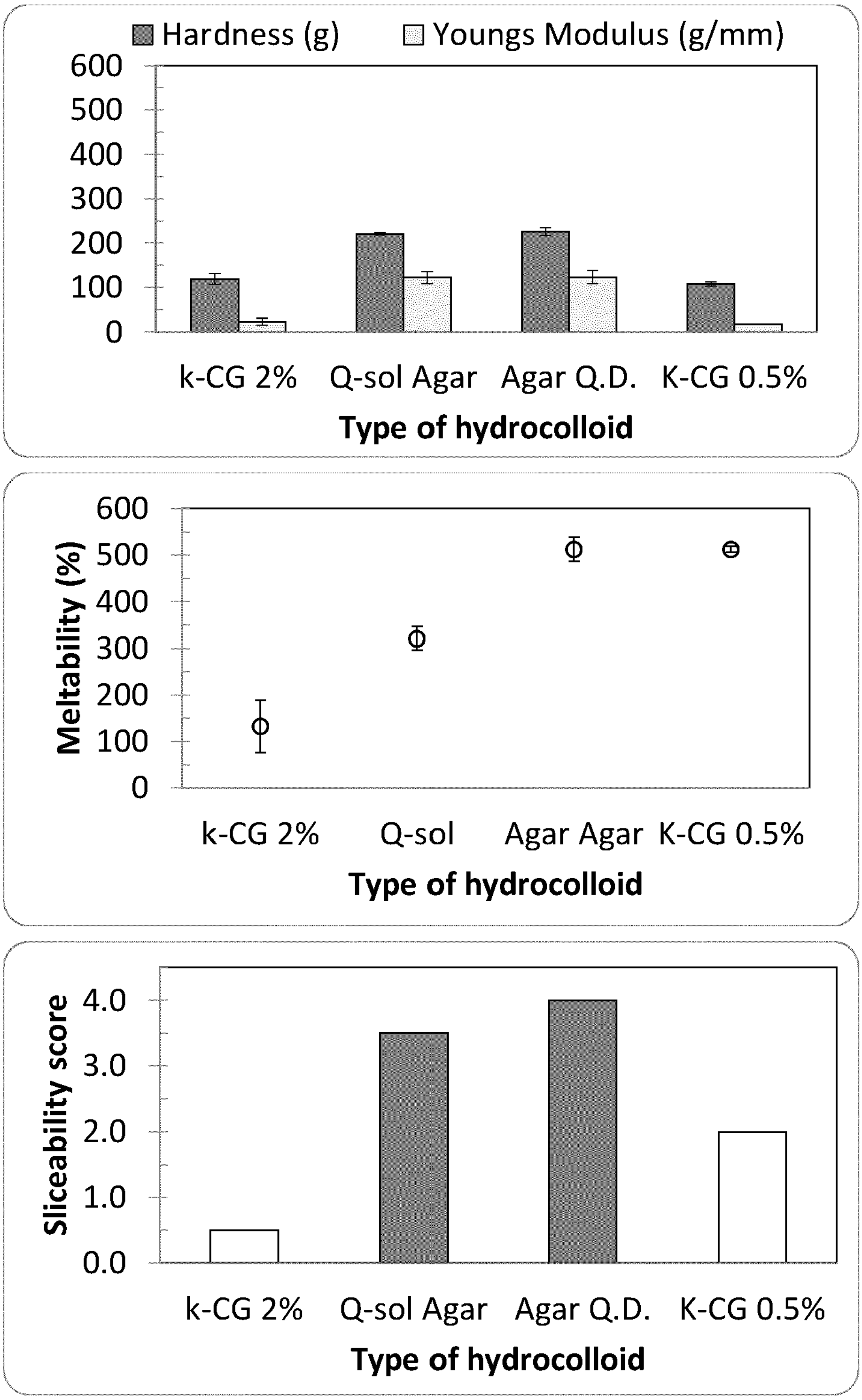
Hardness (g)
Youngs Modulus (g/mm)
600
500
400
300
200
100
0
k-CG 2%
Q-sol Agar
Agar Q.D.
K-CG 0.5%
Type of hydrocolloid
Meltability (%)
600
500
400
300
200
100
0
k-CG 2%
Q-sol
Agar Agar
K-CG 0.5%
Type of hydrocolloid
Sliceability score
4.0
3.0
2.0
1.0
0.0
k-CG 2%
Q-sol Agar
Agar Q.D.
K-CG 0.5%
Type of hydrocolloid

FIG. 9

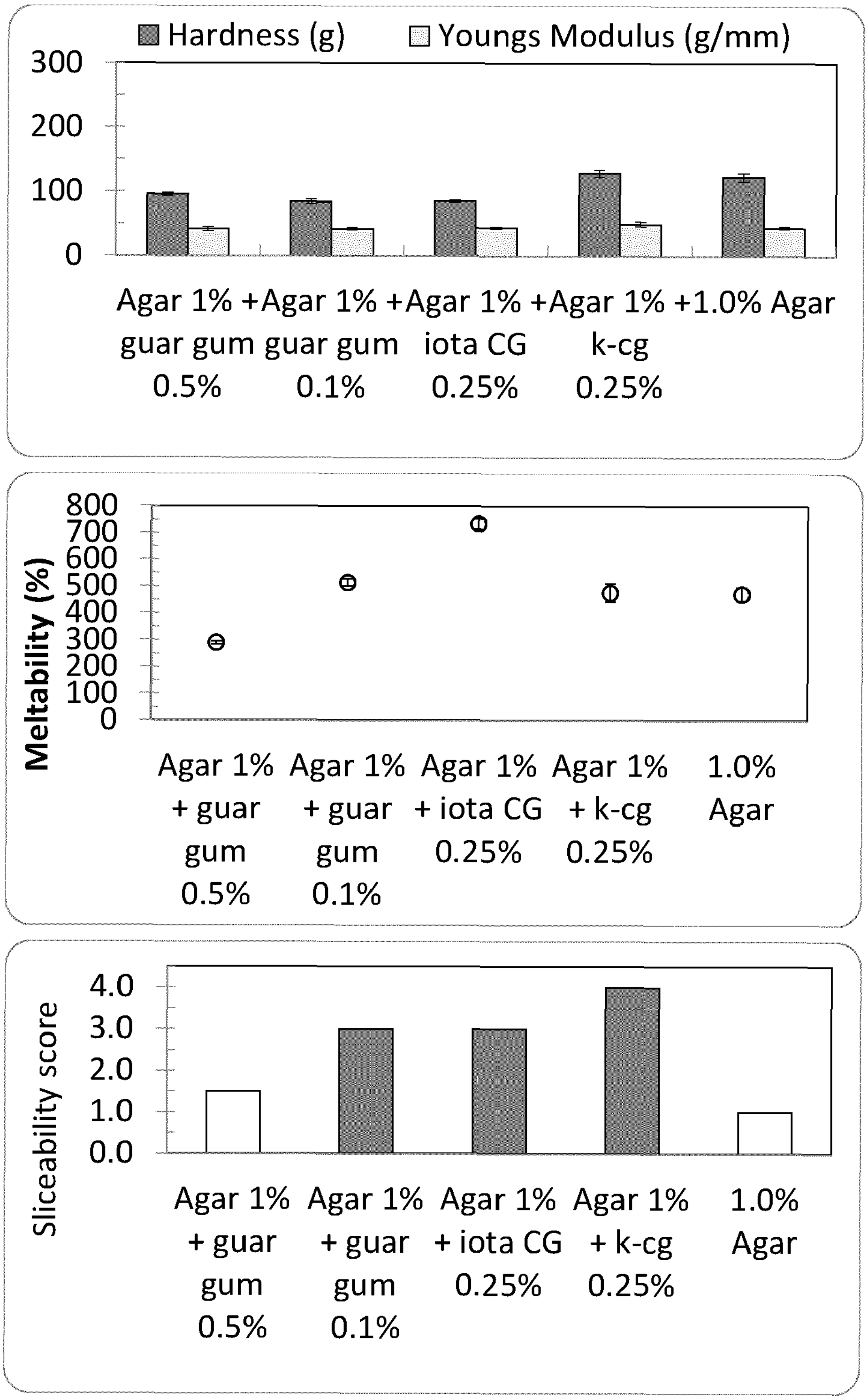

Hardness (g)
Youngs Modulus (g/mm)
300
200
100
0
Agar 1% + guar gum 0.5%
Agar 1% + guar gum 0.1%
Agar 1% + iota CG 0.25%
Agar 1% + k-cg 0.25%
1.0% Agar
Meltability (%)
800
700
600
500
400
300
200
100
0
Agar 1% + guar gum 0.5%
Agar 1% + guar gum 0.1%
Agar 1% + iota CG 0.25%
Agar 1% + k-cg 0.25%
1.0% Agar
Sliceability score
4.0
3.0
2.0
1.0
0.0
Agar 1% + guar gum 0.5%
Agar 1% + guar gum 0.1%
Agar 1% + iota CG 0.25%
Agar 1% + k-cg 0.25%
1.0% Agar


FIG. 10

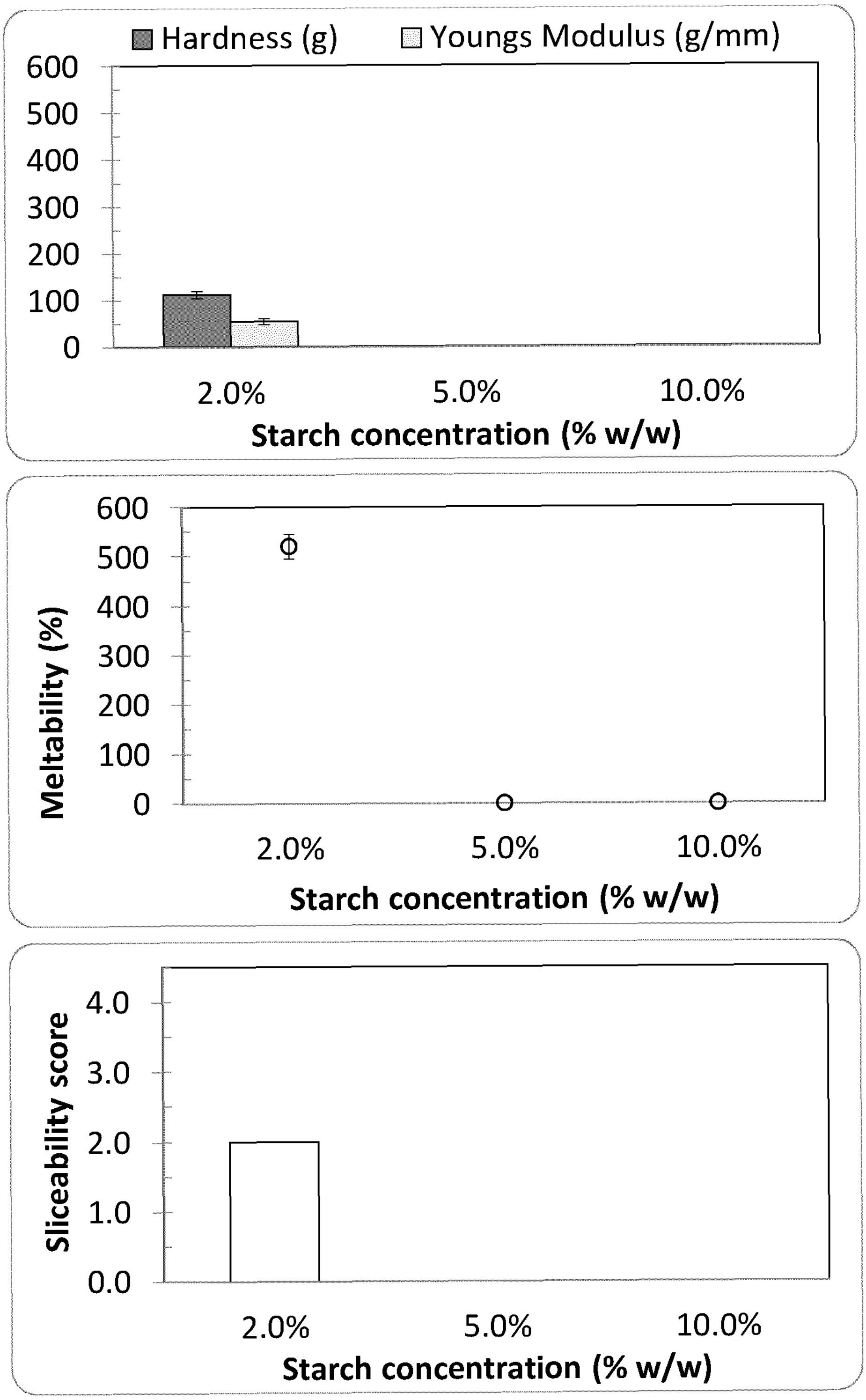
Hardness (g)
Youngs Modulus (g/mm)
600
500
400
300
200
100
0
2.0%
5.0%
10.0%
Starch concentration (% w/w)
Meltability (%)
600
500
400
300
200
100
0
2.0%
5.0%
10.0%
Starch concentration (% w/w)
Sliceability score
4.0
3.0
2.0
1.0
0.0
2.0%
5.0%
10.0%
Starch concentration (% w/w)

FIG. 11

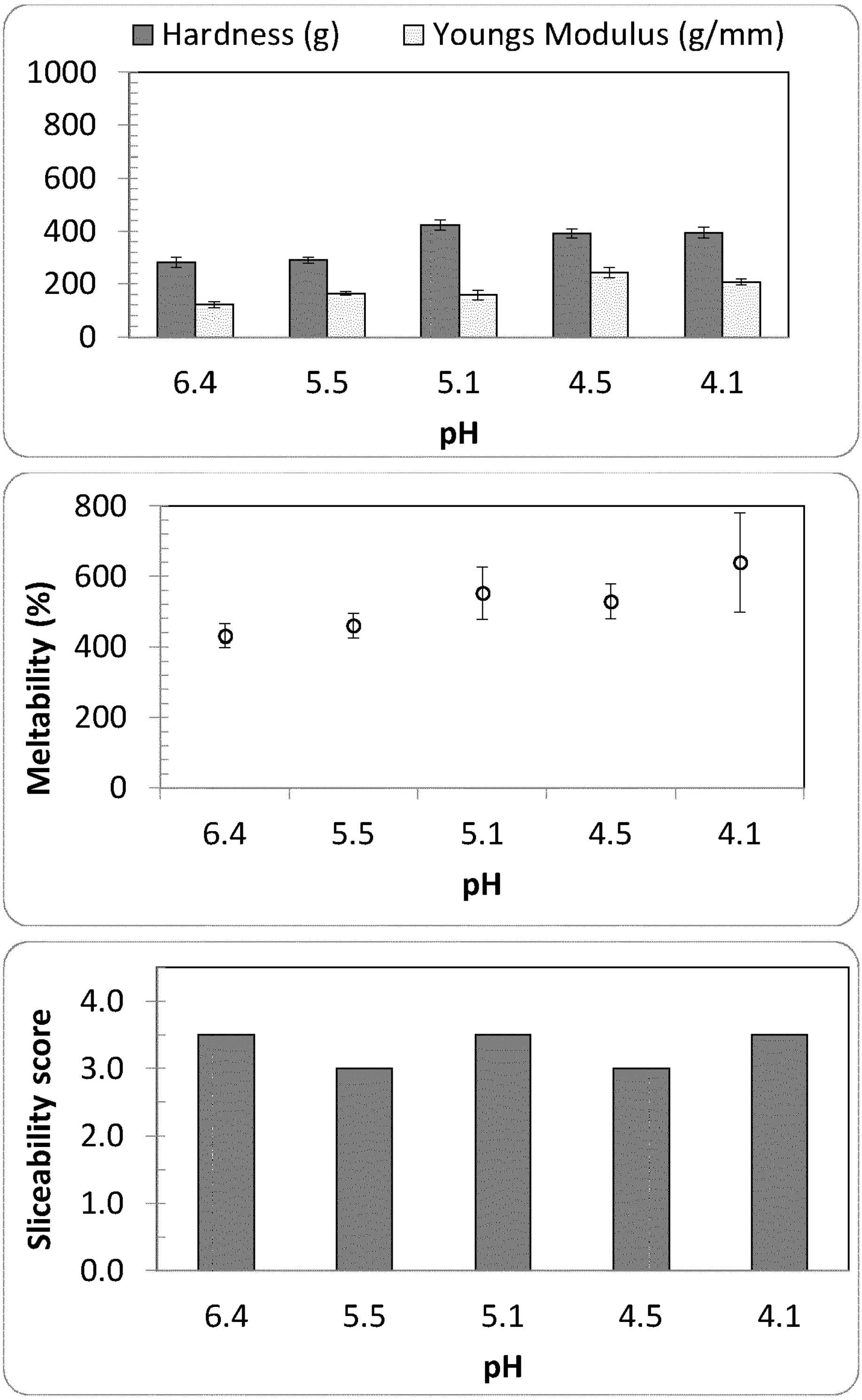
Hardness (g)
Youngs Modulus (g/mm)
1000
800
600
400
200
0
6.4
5.5
5.1
4.5
4.1
pH
Meltability (%)
800
600
400
200
0
6.4
5.5
5.1
4.5
4.1
pH
Sliceability score
4.0
3.0
2.0
1.0
0.0
6.4
5.5
5.1
4.5
4.1
pH

FIG. 12

European Patent Office

# EUROPEAN SEARCH REPORT

Application Number
EP 24 38 2798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/114947 A1 (ROQUETTE FRERES [FR]) 6 June 2024 (2024-06-06) * WPI abstract; claims 1-8 * ----- | 1-15 | INV. A23L29/256 |
| A | US 2017/172169 A1 (GRZANICH STEPHANIE S [US] ET AL) 22 June 2017 (2017-06-22) * page 10, paragraphs 2 and 3; page 11, paragraphs 1 and 2; examples 1, 2, 3, 4 and 6; claims 1-68 * ----- | 1-15 | |
| A | US 2022/338497 A1 (CHU NATHANIEL [US]) 27 October 2022 (2022-10-27) * WPI abstract; claims 1-30 * ----- | 1-15 | |
| | | | TECHNICAL FIELDS SEARCHED (IPC) |
| | | | A23L |

The present search report has been drawn up for all claims

1

| Place of search | Date of completion of the search | Examiner |
|---|---|---|
| Munich | 18 December 2024 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 38 2798

This annex lists the patent family members relating to the patent documents cited in the above-mentioned European search report. The members are as contained in the European Patent Office EDP file on
The European Patent Office is in no way liable for these particulars which are merely given for the purpose of information.

18-12-2024

| Patent document cited in search report | Publication date | Patent family member(s) | Publication date |
|---|---|---|---|
| WO 2024114947 A1 | 06-06-2024 | FR 3142654 A1 | 07-06-2024 |
| | | WO 2024114947 A1 | 06-06-2024 |
| US 2017172169 A1 | 22-06-2017 | EP 3107400 A1 | 28-12-2016 |
| | | US 2017172169 A1 | 22-06-2017 |
| | | WO 2015127388 A1 | 27-08-2015 |
| US 2022338497 A1 | 27-10-2022 | EP 4326078 A1 | 28-02-2024 |
| | | US 2022338497 A1 | 27-10-2022 |
| | | WO 2022226220 A1 | 27-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **RAO, A. V** ; **INAAM A. BEKHEET.** Preparation of agar-agar from the red seaweed Pterocladia capillacea off the coast of Alexandria, Egypt. *Applied and environmental microbiology*, 1976, vol. 32 (4), 479-482
- **MOSSE** ; **JACQUES**. Nitrogen-to-protein conversion factor for ten cereals and six legumes or oilseeds. A reappraisal of its definition and determination. Variation according to species and to seed protein content.. *Journal of Agricultural and Food Chemistry*, 1990, vol. 38 (1), 18-24
- **BERRAZAGA** ; **INSAF et al.** Formulation, process conditions, and biological evaluation of dairy mixed gels containing fava bean and milk proteins: Effect on protein retention in growing young rats. *Journal of dairy science*, 2019, vol. 102 (2), 1066-1082
- **VAN GELDER, W. M. J.** Conversion factor from nitrogen to protein for potato tuber protein. *Potato Research*, 1981, vol. 24, 423-425
- **HURLER, J.** ; **ENGESLAND, A.** ; **POORAHMARY KERMANY, B.** ; **SKALKO-BASNET, N.** Improved texture analysis for hydrogel characterization: Gel cohesiveness, adhesiveness, and hardness.. *Journal of Applied Polymer Science*, 2012, 180-188
- Production and Characterization. Handbook of Fibrous Materials, vol. 1
- Applications in Energy, Environmental Science and Healthcare .. Handbook of Fibrous Materials, vol. 2
- **BOURNE, MALCOLM**. Food texture and viscosity: concept and measurement.. Elsevier, 2002
- **GUNASEKARAN** ; **SUNDARAM** ; **M. MEHMET AK**. Cheese rheology and texture. CRC press, 2002
- **KOSIKOWSKI** ; **FRANK V**. *Cheese and fermented milk foods*, 1977, 711